# EUROPEAN PATENT APPLICATION

(11) **EP 4 790 157 A1**
(43) Date of publication of application: **12.08.2026**
(21) Application number: 24874916.0
(22) Date of filing: 27.09.2024
(51) Int. Cl.: C22B 3/06, C22B 3/44, C22B 3/22, C22B 1/02, C22B 7/00, H01M 10/54

(54) **SYSTEM AND METHOD FOR RECOVERING VALUABLE METALS FROM WASTE BATTERY**

(30) Priority: 05.10.2023 KR 20230132334
(71) Applicant: RD Solution Co., Ltd., Jeollabuk-do 55365 (KR)
(72) Inventor: YOON, Jeongsuk, Daejeon 35211 (KR)
(74) Representative: Jung, Minkyu
(86) International application number: PCT/KR2024/014744
(87) International publication number: WO 2025/075359

(57) **Abstract**

Disclosed is a method of recovering valuable metals from spent batteries according to various embodiments for achieving the above-described objects. The method may include performing heat treatment on a target material corresponding to spent lithium-ion batteries using a heat treatment device, performing a crushing process, using a crushing device, on the recovered target material after the heat treatment to obtain a plurality of recovered materials, performing a sieving process on the plurality of recovered materials through a sieving device to obtain a plurality of separated fractions having different particle sizes, performing a leaching process, using a leaching device, on a first separated fraction among the plurality of separated fractions to separate lithium carbonate (Li₂CO₃) from the first separated fraction and obtain valuable metal oxides, performing a grinding process on the valuable metal oxides using a grinding device to micronize them, obtaining a mixed powder from the micronized valuable metal oxides through a magnetic separation process using a magnetic separation device, and separating the valuable metal oxides from which the mixed powder has been removed into a plurality of sub-oxides based on the difference in specific gravity between the components using a specific gravity separation device.

## Description

### [Technical Field]

The present invention relates to a recycling technology for spent batteries, and more particularly, to a system and method for enhancing efficiency and eco-friendliness in terms of equipment, environment and economy, separating and discharging valuable metals recovered from spent batteries by type, and increasing the recovery rate and purity of the discharged valuable metals.

### [Background Art]

Globally, the movement to promote electric vehicles following carbon neutrality declarations is gaining momentum, leading to increased used of battery packs containing multiple battery cells, and thus the increased need for research on battery recycling methods.

Meanwhile, secondary batteries are actively being adopted in portable electronic devices and electric vehicles due to their high energy density and low self-discharge rate. While primary batteries are non-rechargeable (irreversible) cells, secondary batteries can be recharged through reversible oxidation and reduction reactions.

Particularly, lithium-ion secondary batteries offer higher energy density than other battery types, enabling miniaturization and weight reduction, and can be used in diverse applications, including portable digital devices, automobiles, and smart grids, as medium and large-scale batteries due to a high electromotive force and long lifespan due to minimal memory.

As such, the utilization of lithium-ion secondary batteries is increasing, and the volume of spent batteries after use is also rapidly rising. It is estimated that approximately 5.7 million spent batteries for electric vehicles will be generated by 2040.

Secondary batteries contain positive electrode active materials including cobalt, nickel, manganese, and lithium, as well as electrode materials such as copper and aluminum, and also contain a liquid electrolyte that enables ion transport. Thus, simply discarding end-of-life secondary batteries as waste results in the loss of valuable metals and the release of waste into the environment. Therefore, technology for recovering valuable metals from end-of-life secondary batteries is becoming increasingly important in terms of resource conservation and environmental preservation.

Typically, the process for recovering valuable metals from spent batteries involves a wet method of leaching raw materials with an acid and then recovering valuable metals such as nickel, cobalt, and copper through multiple steps of solvent extraction. This method is advantageous for small-scale battery processing and can yield high-purity materials. However, such a method of separately extracting each valuable metal using solvent extraction requires a long processing time, can be inefficient when large-scale processing is required, generates significant amounts of wastewater and waste acid, and may lack economic viability in terms of equipment and costs.

Accordingly, there is a demand within the industry for developing a system that can effectively recover valuable metals from spent batteries in terms of equipment and costs.

### (Related Art Documents)

### (Patent Documents)

Korean Patent Unexamined Application Publication No. 10-2011-0116934

### [Detailed Description of Invention]

### [Technical Problem]

Various embodiments of the present invention are intended to address the aforementioned issues, and to provide a system and method that imparts improved efficiency in terms of environment, equipment and economy, separates and discharges the recovered valuable metals from spent batteries by type, and increases the recovery rate of the discharged valuable metals.

The problems addressed by the present invention are not limited to those mentioned above, and other problems not mentioned herein will be clearly understood by those of ordinary skill in the art from the following description.

### [Technical Solution]

A method for recovering valuable metals from spent batteries according to various embodiments of the present invention for solving the above-mentioned problems is disclosed. The method may include performing heat treatment on a target material corresponding to spent lithium-ion batteries using a heat treatment device, performing a crushing process, using a crushing device, on the recovered target material after the heat treatment to obtain a plurality of recovered materials, performing a sieving process on the plurality of recovered materials through a sieving device to obtain a plurality of separated fractions having different particle sizes, performing a leaching process, using a leaching device, on a first separated fraction among the plurality of separated fractions to separate lithium carbonate (Li₂CO₃) from the first separated fraction and obtain valuable metal oxides, performing a grinding process on the valuable metal oxides using a grinding device to micronize them, obtaining a mixed powder from the micronized valuable metal oxides through a magnetic separation process using a magnetic separation device, and separating the valuable metal oxides from which the mixed powder has been removed into a plurality of sub-oxides based on the difference in specific gravity between the components using a specific gravity separation device.

In an alternative embodiment, the heat treatment device may include a target material inlet into which a storage unit containing the target material is inserted; an operation unit connected to the target material inlet and moving the storage unit in a vertical direction; a heating unit provided inside the operation unit to heat the target material; a target material discharge unit located below the operation unit to discharge the heated target material, and a heating control unit for controlling the heating unit. The heating control unit is characterized by controlling the heating unit based on predetermined conditions, which may include a temperature condition where the temperature corresponding to the heat treatment is within the range of 875 to 1100 °C.

In an alternative embodiment, the crushing device may include a conveying unit that transfers the recovered target material in one direction after the heat treatment; a crushing unit including a plurality of blades for crushing the heat-treated target material transferred from the conveying unit; and a motor unit that applies power to the crushing unit. The performing of a crushing process is characterized by crushing the multiple recovered materials to a predetermined size, which may be characterized by a length of 2 cm for a first side based on a rectangular shape, and a length of 1 cm or more for a second side different from the first side.

In an alternative embodiment, the sieving device is a device for separating the plurality of recovered materials by particle size, and may include a recovered material inlet into which the plurality of recovered materials are introduced, a sieving unit configured to separate the plurality of recovered materials, and a plurality of recovered material outlets through which the plurality of recovered materials, which are separated from one another, are discharged. The sieving unit may include a first screen with a plurality of first holes formed to pass at least one recovered material among the plurality of recovered materials, a second screen with a plurality of second holes formed to pass at least one recovered material among the plurality of recovered materials, a screen frame that supports the first and second screens, and a vibration unit that applies vibrations to the first and second screens.

In an alternative embodiment, the size of the first hole is larger than that of the second hole. The plurality of recovered material outlets may include a first recovered material outlet that discharges the recovered material recovered through the first screen, a second recovered material outlet that discharges the recovered material recovered through the second screen, and a third recovered material outlet that discharges recovered materials not recovered through the first and second screens.

In an alternative embodiment, the leaching device may include a supply tank, a liquid supply unit that supplies a liquid into the supply tank, a mixing unit provided inside the supply tank and mixing the liquid with the first separated fraction through rotation, a filtering unit that filters a solid-phase material from the mixture corresponding to the liquid and the first separated fraction, and a plurality of leaching discharge units through which solid- and liquid-phase materials, constituting the mixture, are respectively discharged.

In an alternative embodiment, the first separated fraction is characterized as a separated fraction from which copper and graphite have been removed. The performing of a leaching process, using a leaching device, on the first separated fraction among the plurality of separated fractions to separate lithium carbonate (Li₂CO₃) from the first separated fraction and obtain valuable metal oxides may include obtaining the lithium carbonate by drying the liquid-phase material discharged from the mixture.

In an alternative embodiment, the grinding device may include a container forming an internal space, balls provided within the container, and a driving unit applying a rotational force to the container, and the grinding process may be performed by rotating the container to cause collisions and friction between the valuable metal oxides and the balls.

In an alternative embodiment, the magnetic separation device may include an oxide inlet into which the micronized valuable metal oxides are introduced, a magnetic field-generating unit generating a magnetic field to obtain the mixed powder from the valuable metal oxides, and an oxide discharge unit discharging the valuable metal oxides from which the mixed powder has been removed. The magnetic field-generating unit may include a plurality of magnetic field-generating modules that generate magnetic fields of different magnitudes, and may be characterized by obtaining the metal powder in multiple stages using each magnetic field-generating module.

In an alternative embodiment, the plurality of sub-oxides comprises lithium aluminum oxide (LiAlO₂), manganese oxide (MnO), and aluminum dross (Al-dross). The specific gravity separation device, in system for recovering valuable metals from waste batteries comprises a table unit having an inclined surface at a predetermined angle, a vibration supply unit applying vibrations to the table unit, and a plurality of separation-discharge units that are connected to the table unit and discharge respective sub-oxides separated by specific gravity.

Other specific details of the present invention are included in the detailed description and drawings.

### [Advantageous Effects]

According to an embodiment of the present invention, a system and method for recovering valuable metals, which imparts improved efficiency in terms of equipment, environment and economy, separates and discharges the recovered valuable metals from spent batteries by type, and increases the recovery rate of the discharged valuable metals, is provided.

The effects of the present invention are not limited to those mentioned above, and other effects not mentioned will be clearly understood by those of ordinary skill in the art from the following description.

### [Description of Drawings]

Various aspects are described with reference to the accompanying drawings, in which similar reference numerals are used to designate similar components in a general manner. In the following embodiments, for the purpose of description, numerous specific details are presented to provide a comprehensive understanding of one or more aspects. However, it will be apparent that such aspect(s) may be practiced without these specific details:
FIG. 1 is an exemplary block diagram of a system for recovering valuable metals from spent batteries according to one embodiment of the present invention;
FIG. 2 is an overall schematic diagram of a system for recovering valuable metals from spent batteries according to one embodiment of the present invention;
FIG. 3 is an exemplary flowchart of a method for recovering valuable metals from spent batteries according to one embodiment of the present invention;
FIG. 4 is an exemplary cross-sectional view of a heat treatment device according to one embodiment of the present invention;
FIG. 5 is a cross-sectional view illustrating an operation unit and a discharge unit according to one embodiment of the present invention;
FIG. 6 is a cutaway perspective view illustrating an insertion section according to one embodiment of the present invention;
FIG. 7 illustrates target materials at 30 minutes and 40 minutes, respectively, based on Comparative Example 1 according to one embodiment of the present invention;
FIG. 8 illustrates target materials at 30 minutes and 40 minutes, respectively, based on Comparative Example 2 according to one embodiment of the present invention;
FIG. 9 illustrates target materials at 30 minutes and 40 minutes, respectively, based on Example 1 according to one embodiment of the present invention;
FIG. 10 illustrates changes in mass and gas partial pressure according to temperature change for an NCM622 composite pellet according to one embodiment of the present invention;
FIG. 11 illustrates the XRD patterns of a target material corresponding to various temperatures according to one embodiment of the present invention;
FIG. 12 illustrates changes in mass and gas partial pressure according to temperature change for an NCM622 composite pellet according to one embodiment of the present invention;
FIG. 13 is a diagram illustrating a crushing device according to one embodiment of the present invention;
FIG. 14 illustrates a sieving device according to one embodiment of the present invention;
FIG. 15 is a diagram illustrating a leaching device according to one embodiment of the present invention;
FIG. 16 is a diagram illustrating a grinding device according to one embodiment of the present invention;
FIG. 17 is a diagram illustrating a magnetic separation device according to one embodiment of the present invention; and
FIG. 18 is a diagram illustrating a specific gravity separation device according to one embodiment of the present invention.

### [Best Mode]

Various embodiments and/or aspects are now described with reference to the drawings. For purposes of explanation, numerous specific details are set forth in the following description to provide a thorough understanding of one or more aspects. However, it will also be apparent to those of ordinary skill in the art that these aspects may be practiced without these specific details. The following description and the accompanying drawings describe particular exemplary aspects of one or more embodiments in detail. However, these aspects are illustrative, and various methods among many possible methods based on the principles of the various aspects may be employed, and the described explanations are intended to cover all such aspects and their equivalents. Specifically, as used herein, the terms "embodiment," "example," "aspect," and "illustration," and the like are not necessarily to be construed as implying that any described aspect or design is preferred over, or has advantages over, other aspects or designs.

Hereinafter, identical or similar components are denoted by the same reference numerals regardless of the drawing numerals, and redundant descriptions thereof will be omitted. In addition, when describing the embodiments disclosed in this specification, detailed descriptions of related well-known technologies will be omitted if they are deemed to obscure the gist of the embodiments disclosed in this specification. Furthermore, the accompanying drawings are provided merely for facilitating understanding of the embodiments disclosed in this specification, and the technical concept disclosed herein is not limited by the accompanying drawings.

Although terms such as "first," "second," and the like are used to describe various elements or components, these elements or components are not limited by these terms. These terms are used only to distinguish one element or component from another element or component. Accordingly, a first element or component referred to hereinafter may also be a second element or component within the technical spirit of the present invention.

Unless otherwise defined, all terms used herein (including technical and scientific terms) shall be understood in the sense commonly understood by those skilled in the art to which the present invention pertains. Furthermore, terms defined in commonly used dictionaries shall not be interpreted ideally or excessively unless explicitly defined otherwise.

Furthermore, the term "or" is intended to mean inclusive "or," not an exclusive "or." That is, unless otherwise specified or contextually clear, "X uses A or B" is intended to mean one of the natural inclusive substitutions. Thus, "X uses A or B" can apply to any of these cases: X uses A; X uses B; or X uses both A and B. Furthermore, the term "and/or" as used herein should be understood to refer to and include all possible combinations of one or more of the listed related items.

Furthermore, the terms "include" and/or "including" should be understood to mean that the feature and/or component is present, but do not exclude the presence or addition of one or more other features, components, and/or groups thereof. Furthermore, unless otherwise specified or unless the singular form is clearly indicated by the context, the singular form in this specification and the claims shall generally be interpreted to mean "one or more."

When a component is referred to as being "connected to" or "coupled to" another component, it can be understood that the component may be directly connected or coupled to the other component, but may also be connected or coupled to the other component through an intervening component. Conversely, when a component is referred to as being "directly connected to" or "directly coupled to" another component, it should be understood that no intervening component is present.

The term "on" or "above" a component or layer as used herein refers not only to the case where it is directly on the component or layer, but also includes the case where an intervening other layer or other component is interposed therebetween. In contrast, when a component is referred to as being "directly on" or "immediately on" another component or layer, it indicates that no other component or layer is interposed therebetween.

Spatially relative terms such as "below," "beneath," "lower," "above," "upper," and the like may be used herein for ease of description to describe one element or feature's relationship to another element(s) or feature(s) as illustrated in the drawings. Spatially relative terms should be understood to encompass different directions of the device in use or operation in addition to the direction depicted in the drawings.

The purpose and effects of the present invention, and the technical configurations for achieving them, will become clear upon reference to the detailed embodiments described below in conjunction with the accompanying drawings. In describing the present invention, detailed explanations of known functions or configurations will be omitted when deemed to unnecessarily obscure the essence of the invention. Furthermore, the terms described below are defined considering their functions within the present invention and may vary depending on the user's or operator's intent or custom.

However, the present invention is not limited to the embodiments disclosed below but may be implemented in various different forms. These embodiments are provided merely to make the invention complete and to fully inform those skilled in the art to which the invention pertains of the scope of the disclosure. The invention is defined solely by the scope of the claims. Therefore, its definition should be based on the content throughout this specification.

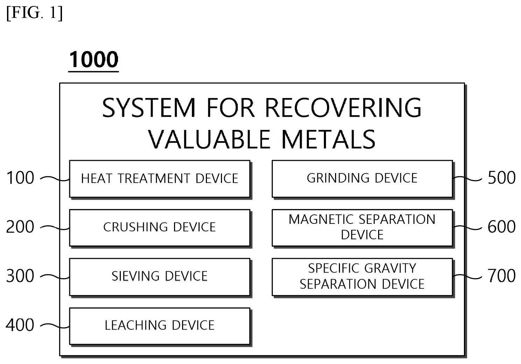

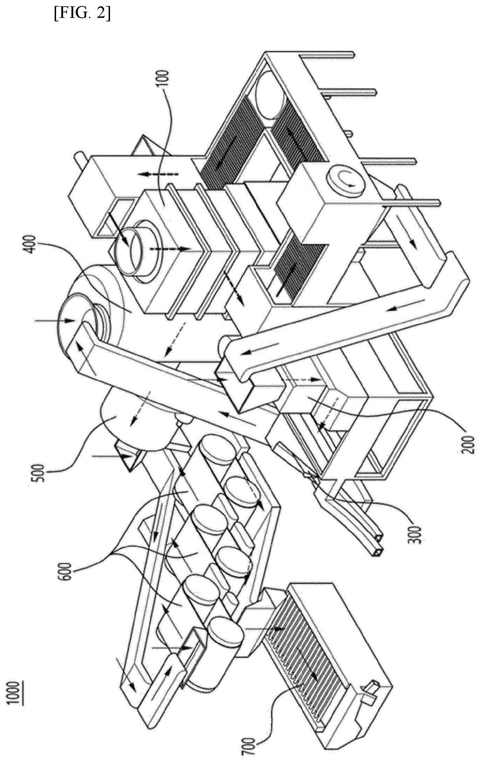

FIG. 1 is a block diagram of a system for recovering valuable metals from spent batteries of the present invention. FIG. 2 is an overall schematic diagram of a system for recovering valuable metals from spent batteries according to one embodiment of the present invention.

As shown in FIG. 1, a system 1000 for recovering valuable metals from spent batteries (hereinafter, a 'valuable metal recovery system') may include a heat treatment device 100, a crushing device 200, a sieving device 300, a leaching device 400, a grinding device 500, a magnetic separation device 600, and a specific gravity separation device 700. The components of the system for recovering valuable metals from spent batteries, shown in FIG. 1, are exemplary. Additional components may be added, or some of the components shown in FIG. 1 may be omitted.

Referring to FIG. 2, the valuable metal recovery system 1000 may include a heat treatment device 100 for heating spent batteries, a crushing device 200 for crushing the product recovered from the heat treatment device 100 to a predetermined size, a sieving device 300 for separating the products crushed by the crushing device 200 into a plurality of separated fractions by particle size, a leaching device 400 for performing a leaching process on at least one of the separated fractions of the plurality of separated fractions separated by the sieving device 300 to obtain valuable metal oxides, a grinding device 500 for grinding the valuable metal oxides, a magnetic separation device 600 for performing magnetic separation to classify the valuable metal oxides micronized by the grinding device 500, and a specific gravity separation device 700 for separating the valuable metal oxides into a plurality of sub-oxides by specific gravity. The devices 100, 200, 300, 400, 500, 600, and 700 of the valuable metal recovery system 1000 may be integrated to continuously perform unit processes for valuable metal recovery. At least one process of the unit processes may be performed at least once, or may also be performed continuously by the plurality of devices.

In one embodiment, the components constituting the valuable metal recovery system 1000 may be designed to perform unit processes in a batch mode. The batch mode between the components may be independent of other devices, and an appropriate transfer or logistics system may be integrated between the devices so that the products resulting from the corresponding unit processes may be transferred.

In various embodiments, the valuable metal recovery system 1000 may further include a conveying device that connects the devices. The conveying device may transfer the separated fractions classified and discharged from the sieving device 300 to the leaching device 400, or transfer the micronized valuable metal oxides treated in the grinding device to the magnetic separation device 600. Through such a conveying device, automation of the overall process system may be achieved, thereby minimizing the manpower required for input. Detailed description of the devices constituting the valuable metal recovery system 1000 will be provided below with reference to the accompanying drawings.

As shown in FIG. 2, the target material of the present invention (i.e., spent batteries or spent lithium-ion batteries) may sequentially pass through the heat treatment device 100, the crushing device 200, the sieving device 300, the leaching device 400, the grinding device 500, the magnetic separation device 600, and the specific gravity separation device 700, and valuable metals are recovered based on the results obtained after sequentially passing through the respective process steps. In a specific embodiment, the spent batteries that have been heat-treated at the predetermined heating rate and heat treatment temperature may be crushed to a predetermined size, and are separated into a plurality of separated fractions using the sieving device 300. In this case, the plurality of separated fractions may mean a first separated fraction, a second separated fraction, and a third separated fraction.

In a specific embodiment, the first separated fraction may be a separated fraction from which copper and graphite have been removed, having an intermediate particle size among the target materials that have been crushed to a certain size or greater. The second separated fraction may be copper having a relatively large particle size among the crushed target materials. The third separated fraction may be graphite having a relatively small particle size among the crushed target materials.

According to an embodiment, the sieving device 300 is configured to classify crushed target materials having a certain size or greater based on particle size, resulting in separation into a plurality of separated fractions. That is, based on the classification result by the sieving device 300, copper and graphite are obtained, and the first separated fraction from which copper and graphite are removed is transferred to the leaching device 400.

The leaching device 400 separates lithium carbonate from the first separated fraction through a leaching process on the transferred first separated fraction. According to one embodiment, the leaching device 400 performs a leaching process related to a water-leaching process using distilled water to separate liquid-phase lithium carbonate (Li₂CO₃) and solid-phase valuable metal oxides. Water leaching may employ a magnetic bar and distilled water without impurities as a solvent. The water leaching time and the ratio of the first separated fraction and distilled water may be set to optimal conditions in consideration of the reaction between lithium carbonate and distilled water. In one embodiment, the reaction rate of lithium carbonate increases as the ratio of distilled water to the first separated fraction is high, or the water leaching time increases.

During the leaching process, while lithium carbonate dissolves in water and changes into an aqueous solution, the first separated fraction remains in a solid powder form. The solution in which the first separated fraction is mixed through agitation may be filtered through a filter, thereby separating the liquid-phase lithium carbonate and the solid-phase valuable metal oxides. The separated liquid may be subjected to a drying process (e.g., spray drying), resulting in the recovery of lithium carbonate powder.

The solid-phase valuable metal oxides separated in the leaching process may be transferred to the grinding device 500, and micronized through a grinding process. Finely grinding the valuable metal oxides may be intended to separate the components constituting the valuable metal oxides.

The micronized valuable metal oxides are transferred to the magnetic separation device 600, which obtains a mixed powder using a magnetic force. The magnetic separation device 600 separates the micronized valuable metals into a mixed powder having magnetic properties (i.e., magnetic material) and non-magnetic materials using a magnetic field generated by an electromagnet or a permanent magnet. In one embodiment, the magnetic separation device may include a storage unit for temporarily storing a residue and a conveyer belt for classifying the valuable metal oxides into magnetic and non-magnetic materials and transferring them from the storage unit. That is, the mixed powder having magnetic properties is separated from the micronized valuable metal oxides through magnetic separation utilizing the magnetic separation device 600, and the valuable metal oxides from which the mixed powder is removed is transferred to the specific gravity separation device 700. According to one embodiment, the mixed powder may be a metal powder having magnetic properties, for example, Ni-Co powder, but the present invention is not limited thereto. In various embodiments, when the spent batteries are NMC batteries, the mixed powder obtained in the corresponding process may be Ni-Co alloy powder. Meanwhile, when the spent batteries are LCO and LFP batteries, the mixed powder obtained in the corresponding process may contain at least one of Ni, Co, Fe, Fe-C, and Fe-P. In other words, the type of mixed powder obtained in the corresponding process may vary depending on the type of spent batteries from which valuable metals are recovered.

The specific gravity separation device 700 may separate the valuable metal oxides into a plurality of sub-oxides through specific gravity-based separation of the mixed powder-removed valuable metal oxides. In one embodiment, the plurality of sub-oxides may include first to third sub-oxides, and the first to third sub-oxides may be related to lithium aluminum oxide (LiAlO₂), manganese oxide (MnO), and aluminum dross (Al-dross), respectively. In a specific embodiment, the specific gravity separation device 700 may separate and discharge the valuable metal oxides from which nickel-cobalt powder has been removed into lithium aluminum oxide (LiAlO₂), manganese oxide (MnO), and aluminum dross (Al-dross) according to specific gravity.

That is, as the spent batteries sequentially pass through the process steps corresponding to the respective devices of the valuable metal recovery system 1000 of the present invention, valuable metals are obtained. Specifically, in the sieving process step, graphite and copper are separated and recovered, and in the leaching process step, lithium carbonate may be recovered. In addition, in the magnetic separation process step, a mixed powder related to magnetic materials is obtained, and in the specific gravity separation process, a plurality of sub-oxides (e.g., aluminum oxide, manganese oxide, and aluminum dross) are obtained.

The valuable metal recovery system 1000 of the present invention has an advantage in that the resulting products are sequentially classified and obtained according to the process sequence described above, and can improve the recovery rate of a material by mutually complementary process steps.

For example, when the process proceeds from the heat treatment to the sieving process without a crushing process, the mixed powder is not readily separated from copper, and therefore separation between copper, graphite, and oxides is not easily achieved. This can finally reduce the recovery rates of the copper and the graphite, and also affect the recovery rates of cobalt, nickel, aluminum oxide, manganese oxide, and aluminum dross, which are ultimately discharged. As another example, when the magnetic separation process is not performed prior to the specific gravity separation process for separation by specific gravity, resulting in magnetic materials not being separated from the valuable metal oxides, it may be difficult to identify each oxide by type during specific gravity separation, and nickel and cobalt are separated into their oxides, which can reduce the recovery rates for each metal. The valuable metal recovery system 1000 of the present invention may maximize the recovery rates of the valuable metals sequentially through the above-described process steps.

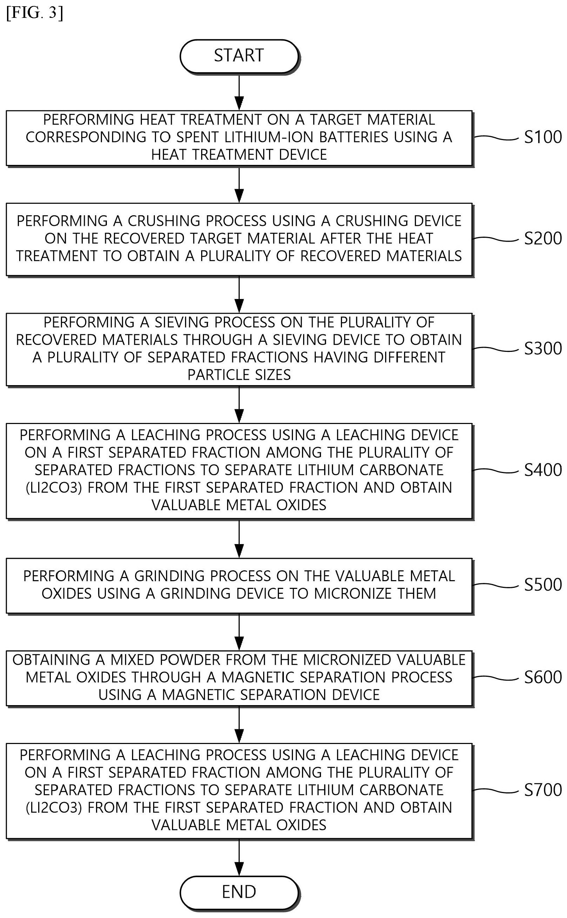

A more detailed description of the components that constitute the configuration and system for increasing the recovery rates of valuable metals through the sequential process sequence of the valuable metal recovery system 1000 of the present invention will be described below with reference to FIGS. 3 to 18.

FIG. 3 is an exemplary flowchart of a method for recovering valuable metals from spent batteries according to one embodiment of the present invention.

According to one embodiment of the present invention, a method for recovering valuable metals from spent batteries may include the process steps shown in FIG. 3. The sequence of the steps shown in FIG. 3 may be changed as needed, and at least one step may be omitted or added. That is, the steps below are merely an example of the present invention, and the scope of the present invention is not limited thereto.

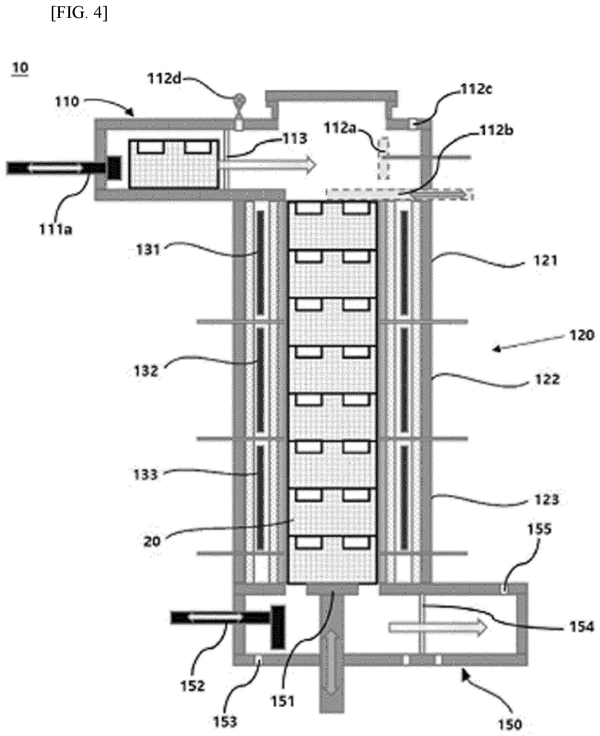

According to one embodiment of the present invention, the method for recovering valuable metals from spent batteries may include performing heat treatment on a target material corresponding to spent lithium-ion batteries using a heat treatment device 100 (S100). A more detailed description on the heat treatment device 100 will be described below with reference to FIGS. 4 to 12.

The heat treatment device 100 may include a target material inlet 110 into which a storage unit 20 accommodating the target material is inserted, an operation unit connected to the target material inlet 110 and configured to move the storage unit 20 in the vertical direction, a heating unit 130 provided inside the operation unit to heat the target material, a target material discharge unit 150 located under the operation unit to discharge the heated target material, and a heating control unit configured to control the heating unit 130.

The heat treatment device 100 according to the present invention, as shown in FIG. 4, is configured to heat the storage unit 20 accommodating the target material corresponding to spent lithium-ion batteries to obtain required raw materials (i.e., valuable metals), and includes the target material inlet 110 in which the storage unit 20 waits to be loaded into the operation unit, an operation unit for performing a heating operation by positioning the storage unit, and a target material discharge unit 150 for withdrawing the storage unit 20 from the operation unit after completion of a firing operation.

The target material inlet 110 includes an insertion section 111 for inserting the storage unit 20, and a standby section in which the inserted storage unit waits before being loaded into the operation unit.

The operation unit of the present invention includes a first operation unit 121, a second operation unit 122, and a third operation unit 123, which are disposed in the vertical direction.

The target material-containing storage unit 20 may be inserted into the operation unit through the target material inlet 110, and in this process, positioning arrangement and an exhaust process for facilitating firing may be performed.

The storage unit 20 is moved from the target material inlet 110 to the operation unit, and is subject to a vertical heating process while sequentially passing through the first operation unit 121, the second operation unit 122, and the third operation unit 123.

The heated storage unit 20 is moved from the operation unit to the target material discharge unit 150, is refined through the introduction of a predetermined gas, is cooled through the introduction of a cooling gas, and then is discharged to the outside.

In the process of processing the target material loaded to the storage unit 20 by the above-described components, the heating control unit may control the driving of the target material inlet 110 and the operation unit, and may be implemented in various ways, such as adjusting the heating rate within the operation unit and a gas partial pressure, and driving components in the target material inlet 110 and the target material discharge unit 150. Here, the heating control unit may control at least one of the heating rate and the heating time of the heating unit.

The target material inlet 110 includes an insertion section, a standby section, and a first opening/closing unit, which are connected with the operation unit and configured to provide the storage unit 20.

Referring to FIG. 4, the operation unit is configured to provide a space for heating a target material while being positioned in the storage unit 20. To this end, the operation unit is formed in a cylindrical shape open in the vertical direction, thereby inducing both the target material and the storage unit 20 to be heated while heating units, refractory units, and temperature measuring units 124 are disposed therein. In addition, the operation unit consists of the first operation unit 121, the second operation unit 122, and the third operation unit 123, which are arranged in the vertical direction.

The first operation unit 121 provides a space where a first heating process is performed on the storage unit 20 that has been introduced from the standby section. To this end, a first internal temperature is established in the first operation unit 121, the second operation unit 122 is provided on a lower side, and the first and second operation units 121 and 122 are connected to each other. As the second operation unit 122 is positioned below the first operation unit 121 and has a second internal temperature, a second process for heating the storage unit 20 is performed. The second operation unit 122 is connected with each of the first operation unit 121 and the third operation unit 123. The third operation unit 123 is provided below the second operation unit 122, and a third process for heating the storage unit 20 at a third internal temperature is performed.

In another embodiment of the present invention, a holding unit may be further included below the third operation unit 123. The holding unit is configured to temporarily hold the target material and the storage unit 20 heated through the first to third operation units 121 to 123 so as to prevent unintended thermal deformation. To this end, the holding unit is formed in the same shape as the first to third operation units 121 to 123, but does not include a heating unit to be described below. Therefore, natural cooling may be induced without additional heating for the target material and the storage unit 20.

The heating unit is a means for heating the target material and the storage unit 20, installed in the operation unit, and more particularly, is configured to melt the target material. To this end, the heating unit may be configured as an SIC heater capable of generating high-temperature heat, but the present invention is not limited thereto. The heating unit may be an induction heating device by supply of high- and low-frequency power. For example, the heating unit may be configured through an induction heating device using a metal coil such as copper coil. However, the heating unit is not limited thereto, and the heating unit may include an appropriate heating device capable of stably increasing the temperature and maintaining the temperature (e.g., a converter or an electric furnace capable of large-scale processing).

According to one embodiment, the heating unit may be provided as a plurality of heating units, enabling different temperature control, depending on the height of the operation unit. The heating unit includes a first heating unit 131, a second heating unit 132, and a third heating unit 133, which are respectively disposed in the first operation unit 121, the second operation unit 122, and the third operation unit 123. Here, the first heating unit 131, the second heating unit 132, and the third heating unit 133 may be independently or integrally driven by a heating control unit to be described below so as to heat the target material and the storage unit 20 to the first internal temperature, the second internal temperature, and the third internal temperature.

In another embodiment of the present invention, at least one component of the first heating unit 131, the second heating unit 132, and the third heating unit 133 may be provided in plural, and the resulting components may be disposed to have a circular arrangement centered on the central axis of the operation unit in the vertical direction. Accordingly, it is possible to reduce the usage of the heating units and also uniformly achieve the first, second, and third internal temperatures. In addition, the first, second, and third heating units 131, 132, and 133 may be independently or integrally driven by a heating control unit.

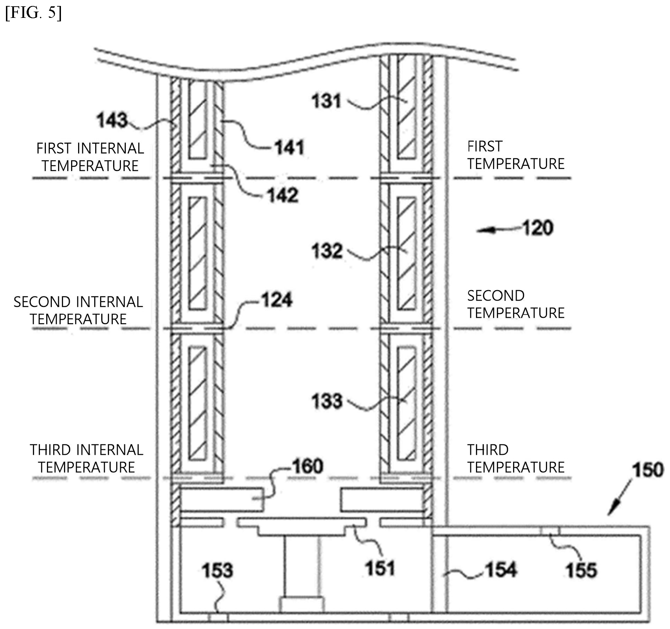

The refractory units are configured to prevent deterioration of the heating units by the target material being heated inside the operation unit, and prevent rapid changes in internal temperatures. To this end, as shown in FIG. 5, the refractory units are disposed to surround or be close to the heating units. The refractory units are provided for the first heating unit 131, the second heating unit 132, and the third heating unit 133, and include a first refractory unit 141, a second refractory unit 142, and a third refractory unit 143 according to their arrangement positions.

The first refractory unit 141 is configured to protect the inward direction of the plurality of heating units. Specifically, the first refractory unit 141 is located in an inward direction facing the central axes of the first operation unit 121, the second operation unit 122, and the third operation unit 123 for the first heating unit 131, the second heating unit 132, and the third heating unit 133. That is, the first refractory unit 141 is disposed to correspond to portions of the first heating unit 131, the second heating unit 132, and the third heating unit 133 facing an inward direction thereof, thereby preventing deterioration of the heating units by impurities during heating of the target material.

The second refractory unit 142 performs the same function as the above-described first refractory unit 141, and is provided to surround the first heating unit 131, the second heating unit 132, and the third heating unit 133. In one example, when the first to third heating units 131 to 133 have an arc-shaped cross-section, the cross-section of the second refractory unit 142 has a shape that accommodates the arc-shaped cross-section. Therefore, the second refractory unit 142 may not only prevent deterioration by impurities entering from all directions, but also prevent deterioration by radiant heat.

The third refractory unit 143 performs the same function as the above-described first and second refractory units 141 and 142, and is disposed in an outward direction of the first heating unit 131, the second heating unit 132, and the third heating unit 133. Therefore, the first refractory unit 141, the heating unit, the second refractory unit 142, and the third refractory unit 143 are sequentially arranged in order of proximity to the central axis of the operation unit, thereby forming a horizontal cross-section arrangement.

The temperature measuring units 124 are configured to measure the temperature of an operation unit or heating unit, and allow the heating control unit to be described below to control the internal temperature of the operation unit based on the temperature. To this end, the temperature measuring units 124 may be located inside the operation units. Here, the temperature measuring units 124, as a separate temperature sensing means, may be installed while being connected with a separate deterioration preventing means, which is not damaged by high temperature.

The temperature measuring units 124 are provided between the first operation unit 121 and the second operation unit 122, between the second operation unit 122 and the third operation unit 123, and below the third operation unit 123. Therefore, each temperature measuring unit 124 may measure the internal temperature of each of the first operation unit 121, the second operation unit 122, and the third operation unit 123.

In another embodiment of the present invention, the temperature measuring units 124 may be installed in the first to third operation units 121 to 123, and may have the same installation point. That is, the respective temperature measuring units 124 installed in the first to third operation units 121 to 123 have the same horizontal distance from the central axis of the operation unit, and are spaced an equal distance apart in the vertical direction. Therefore, this can minimize thermal measurement errors generated when each temperature measuring unit 124 measures the internal temperature of each operation unit.

The target material discharge unit 150 is located below the operation unit and configured to discharge the target material from the operation unit. Therefore, the target material inlet 110, the operation unit, and the target material discharge unit 150 are connected to each other, thereby implementing a vertical heating structure, which has the effect of facilitating the movement of the target material and gas required for heating the target material, compared to a conventional horizontal heating structure.

In addition, the gas for heating the target material is initially introduced into in the target material discharge unit 150, and the gas (predetermined gas) moves upward to induce firing of the target material and then moves to the target material inlet 110 and is discharged.

The target material discharge unit 150 includes a vertical movement unit 151 for withdrawing the target material, a second pressurizing movement unit 152 for moving the target material under pressure, a gas supply unit 153 for introducing a predetermined gas, a second opening/closing unit 154 for partitioning the internal space, a second gas discharge unit 155 for ventilating the space partitioned by the second opening/closing unit 154, and a cooling unit 156 for cooling the target material.

The vertical movement unit 151 is configured to move the target material from the inside of the operation unit to the inside of the target material discharge unit 150, and vertically moves the target material-containing storage unit 20 and the target material, while supporting them vertically. To this end, the vertical movement unit 151 may be configured as a multistep supporting means having a vertically adjustable length using electricity or hydraulic pressure, and the upper portion of the vertical movement unit 151 may be provided in a plate shape to provide more secure contact with the storage unit 20. After the storage unit 20, into which the target material has been introduced, is heated by the heating unit in the operation unit, the storage unit 20 descends integrally with the vertical movement unit 151.

The second pressurizing movement unit 152 is configured to move in a lateral direction to move the target material disposed in the internal space of the target material discharge unit 150 and the target material-containing storage unit 20 under pressure, and is provided in the same manner as a first pressurizing movement unit 111a described below.

The gas supply unit 153 is configured to introduce a predetermined gas for firing the target material into the interior of the target material discharge unit 150 and is provided as a separate introduction means including a pump for inducing the movement of a fluid such as gas, but the present invention is not limited thereto. Here, the predetermined gas is provided as at least one of carbon monoxide, carbon dioxide, and argon, which can induce heat treatment of the target material and create an inert gas atmosphere.

The second opening/closing unit 154 divides the internal space of the target material discharge unit 150 into two or more portions to be used for holding the storage unit 20 and cooling the storage unit 20, respectively, and has the same configuration as a first opening/closing unit 113.

By closing the second opening/closing unit 154, the internal space of the target material discharge unit 150 may be divided into a holding space connected to the internal space of the operation unit and a post-processing space disconnected from the operation unit. The above-described gas supply unit 153 may be formed corresponding to the holding space, and may include the second gas discharge unit 155 and the cooling unit 156 in the post-processing space.

The second gas discharge unit 155 is configured to ventilate at least one portion of the partitioned internal space of the target material discharge unit 150, may be provided as a discharge module with a discharge pump, but the present invention is not limited thereto. When the above-described second opening/closing unit 154 is open, the second gas discharge unit 155 may ventilate the entire internal space of the target material discharge unit 150. Further, when the second opening/closing unit 154 is closed, the second gas discharge unit 155 may ventilate only the internal space of the post-processing space.

The cooling unit 156 is configured to cool the target material disposed in the post-processing space and the storage unit 20, and is provided as a spray means for spraying a gas with a predetermined temperature. The target material and the storage unit 20 may be air-cooled to prevent damage such as unintended cracking. Here, the predetermined temperature is set to 50 to 100 °C or less, and may be set as a temperature that decreases by 10 °C per hour, but the present invention is not limited thereto.

A space into which a fixing unit 160 can be inserted is secured between the upper and lower storage units 20. The fixing unit 160 prevents the vertical positions of the storage units into which the target material is contained and heated as a whole from unintentionally changing. To this end, the fixing unit 160 is configured in a plate shape and is located below the storage unit 20 within the operation unit such that the upper surface of the fixing unit comes into contact with a lower surface of the storage unit 20. In addition, to more firmly fix the height of the storage unit 20, there may be a plurality of fixing units 160, which may be disposed to have a circular arrangement centered on the central axis of the operation unit.

The fixing unit 160 may be further provided and disposed above the storage unit 20, thereby inducing height fixing for another storage unit 20 located in an upward direction. To more readily introduce the predetermined gas and establish an air circulation structure in the storage unit 20, an insertion plate 161 is further included, and the insertion plate 161 includes a first inlet hole 161a, a second inlet hole 161b, and a fixing auxiliary portion161c. A more detailed description of this will be provided below.

The heating control unit may control the operation of the heating unit, and control the internal temperature of the operation unit while being connected with the temperature measuring unit 124 that measures the temperature of the heating unit.

The temperature measuring units 124 located inside the operation unit measure first, second, and third temperatures corresponding to the first operation unit 121, the second operation unit 122, and the third operation unit 123, respectively, and the heating control unit compares the measured first, second and third temperatures with the first, second, and third internal temperatures, which are specified in advance.

First, the heating control unit compares the second temperature with the second internal temperature, and based on the comparison result, controls the operation of the second heating unit 132.

When the second temperature is higher than the second internal temperature, the heating control unit calculates the heating rate of the second heating unit 132, and controls the operation of the heating unit to heat the target material according to a predetermined optimal heating rate.

When the second temperature is the same as the second internal temperature, the heating control unit controls the second heating unit 132 to continuously heat the target material at the optimal heating rate.

When the second temperature is lower than the second internal temperature, the heating control unit calculates a heating rate of the second heating unit 132, and controls the operation of the second heating unit 132 so that the calculated heating rate matches the optimal heating rate. Here, after the second heating unit 132 is operated such that the heating rate of the second heating unit 132 is higher than the optimal heating rate for a predetermined time (e.g., 10 seconds), the cracking and reduction of the target material may be more readily induced by controlling the heating rate of the second heating unit 132 to match the optimal heating rate.

As described above, after the operation control of the second heating unit 132 by the comparison between the second temperature and the second internal temperature, the heating control unit may control the operation of the first heating unit 131 in the same manner based on the result of the comparison between the first temperature and the first internal temperature, and control the operation of the third heating unit 133 in the same manner based on the result of the comparison between the third temperature and the third internal temperature.

Controlling the internal temperature of the second operation unit 122 first among the first to third operation units 121 to 123 is intended to maximize the thermal efficiency of the target material where it is fully heated and reduced first

When the need to preheat the target material is high, the first heating unit 131 is controlled after adjusting the internal temperature of the second operation unit 122, and when the need to reduce the target material is high, the third heating unit 133 may be controlled first after the control of the second heating unit 132. In various embodiments, the first heating unit 131 may be subjected to temperature control for preheating, and the third heating unit 133 may be subjected to temperature control for reduction. That is, depending on the input amount and type of the target material, the order of control of the first heating unit 131 and control of the third heating unit 133 may vary.

By adjusting the operation of the respective heating units based on the measured temperatures of the first operation unit 121, the second operation unit 122, and the third operation unit 123, it is possible to prevent a decrease in thermal efficiency for the target material in advance.

The heating control unit establishes and controls the operating environment of the operation unit in the process of recovering valuable metals consisting of at least one of cobalt (Co), nickel (Ni), manganese (Mn), and lithium (Li) by heating the target material. Specifically, the heating control unit controls the operation of the above-described gas supply unit 153 to induce the predetermined gas to be introduced into the target material discharge unit 150. Afterward, the predetermined gas moves along the operation unit located above in the target material discharge unit 150, and comes into contact with the target material while moving, thereby creating a reducing gas atmosphere.

The operation unit including the first to third operation units 121 to 123 heat-treats the target material under the predetermined mixed reducing gas atmosphere, which is determined by the partial pressures of carbon dioxide and carbon monoxide in the predetermined gas. Here, when carbon monoxide is generated during the heat treatment process for the target material, the partial pressure in the operation unit may be set by taking into account the generated carbon monoxide.

Here, the heating control unit may introduce the predetermined gas through the gas supply unit 153 or exhaust the gas through a first gas discharge unit 112c so that log(PCO₂/PCO), which is the logarithm of the ratio of the partial pressure of carbon dioxide to that of carbon monoxide, falls within the range of -2.15 to 2.5 or less. Specifically, the logarithmic value (log(PCO₂/PCO)) based on the difference in partial pressure between carbon monoxide and carbon dioxide falls within the range of -2.15 to 2.5, but this value is adjusted to decrease as the internal temperature of the operation unit increases.

When the first internal temperature, the second internal temperature, or the third internal temperature corresponding to the first, second, and third operation units 121, 122, and 123, respectively, falls within at least one of the ranges of 500 to 600 °C, 600 to 700 °C, 700 to 800 °C, 800 to 900 °C, and 900 to 1000 °C, the heating control unit controls further introduction or exhaustion of the predetermined gas through the gas target material inlet 110 and the first gas discharge unit 112c such that the above-mentioned logarithmic value falls within at least one of the ranges from 0.45 to 2.50, -0.20 to 2.15, -0.90 to 1.85, -1.55 to 1.60, and -2.15 to 1.40.

In one example, the heating control unit may suppress the generation of carbon by adjusting the input amount of carbon dioxide in the predetermined gas so that it is not insufficient, and may shorten the heat treatment time by adjusting the input amount thereof so that it is excessive.

When the amount of the introduced predetermined gas is excessive, the heating control unit may exhaust it by opening the first gas discharge unit 112c formed in the target material inlet 110. Prior to this, in order to minimize a pressure gradient that may occur during the process of exhausting the predetermined gas from the internal space of the target material inlet 110, exhausting the internal space of the target material inlet 110 by a pressure maintaining unit 112d may be performed in advance or in parallel.

In addition, the present invention may include pretreating a target material provided from spent lithium-ion batteries, performing first heat treatment, separating valuable metals, and performing second heat treatment.

The pretreatment of the target material is performed to prevent explosions or render the spent batteries harmless, and the removal of impurities such as an outer can. For example, since the spent batteries that have reached the end of their usable life are provided in a sealed system and contain materials such as an electrolyte, there is a risk of explosion during a grinding process. Accordingly, by performing discharge treatment of the target material provided from the spent batteries and removal of the electrolyte, process safety may be improved and the recovery rate of valuable metals, such as copper, nickel, and cobalt, may be increased. The discharge treatment may be performed by immersing the spent batteries in an aqueous solution containing alkali metal or alkaline earth metal ions, and the type of aqueous solution is not limited thereto.

Subsequently, the target material may be contained in a storage unit to be described later and then introduced into the operation unit 120 through the target material inlet 110 to undergo the first heat treatment. The operation unit 120 is not particularly limited as long as it includes an inlet at one side and an outlet at the other side. The operation unit 120 may be formed in a vertical configuration that allows vertical input and discharge, or another connection configuration. As the heat source, a gas burner a charcoal burner, a resistance heating element, or an IR lamp may be used, but the present invention is not limited thereto. Meanwhile, after the completion of the first heat treatment, the target material, such as Me (M=Co or Ni, or Mn), MeO (M=Co or Ni, or Mn), Li₂CO₃, LiAlO₂, graphite (C), Al, or Cu, may be included in the storage unit.

In the first heat treatment, the predetermined gas (mixed gas) may be introduced into the operation unit 120, and heat-treated under a mixed gas atmosphere containing carbon monoxide and carbon dioxide. The temperature during the heat treatment may be determined depending on the type and shape of the battery, and may be adjusted such that the higher the heat treatment temperature during the heat treatment, the smaller the log(PCO₂/PCO). In one example, a pouch-type spent battery containing a lithium-nickel-cobalt-manganese oxide or lithium-cobalt oxide as a positive electrode active material is heat-treated at a temperature of 650 to 850 °C. Here, the heat treatment may be performed under a mixed reducing gas atmosphere containing carbon dioxide and carbon monoxide, which is adjusted so that the value of log(PCO₂/PCO) is within the range of -1.20 to 2.00.

In addition, when the heat treatment temperature ranges from 500 to 600 °C, 600 to 700 °C, 700 to 800 °C, 800 to 900 °C, or 900 to 1,000 °C, the value of log(PCO₂/PCO) may be adjusted within in the range of 0.45 to 2.50, -0.20 to 2.15, -0.90 to 1.85, -1.55 to 1.60, or 2.15 to 1.40, respectively (see Table 1). Therefore, it is possible to reduce the time required for heat treatment while suppressing the generation of carbon caused by the introduction of the mixed gas and heat treatment.

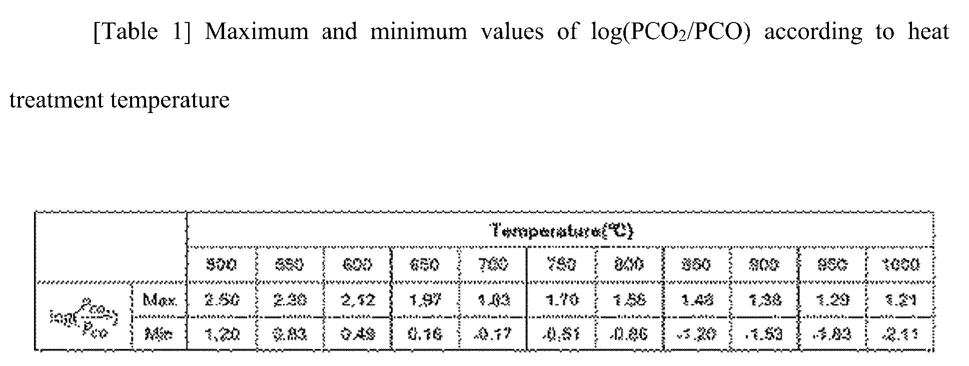

After the completion of the first heat treatment, second heat treatment may be performed to remove residual carbon. Here, the internal temperature of the operation unit 120 is controlled to have a temperature of 700 °C or higher. Accordingly, residual carbon can be easily removed, and carbon monoxide that may be formed can be utilized in the first heat treatment. After the second heat treatment, the target material may consist of Me (M=Co or Ni, or Mn) or MeO (M=Co or Ni, or Mn), Li₂CO₃, LiAlO₂, Al-dross, Ni-Co alloy powder, Cu, residual carbon, etc.

After the first and second heat treatments are completed, valuable metals may be recovered according to the physical properties of the target material. Sieving is performed on a target material containing a magnetic metal using a magnetic field, and ash is classified by particle size through sieving using air-classification devices, centrifugal forces, or vibrations. In addition, Li-rich compounds such as Li₂CO₃ and LiAlO₂ may be recovered through a leaching process using water or an acid, and the corresponding separation process may be performed before or after the second heat treatment depending on the purpose. That is, through at least one of a separation process based on sieving, a separation process based on magnetic force, and a separation process using leaching with an acid or water, valuable metals may be separated and obtained.

By the series of methods described above, valuable metals may be recovered in four groups, for example, an alloy-type metal containing at least one of nickel, cobalt, and manganese having magnetic properties; non-magnetic Al-dross when an outer can (case) of the spent battery is aluminum; lithium carbonate recovered using a water leaching method; and MnO, LiAlO₂ and residual carbon that is not oxidized during the second heat treatment.

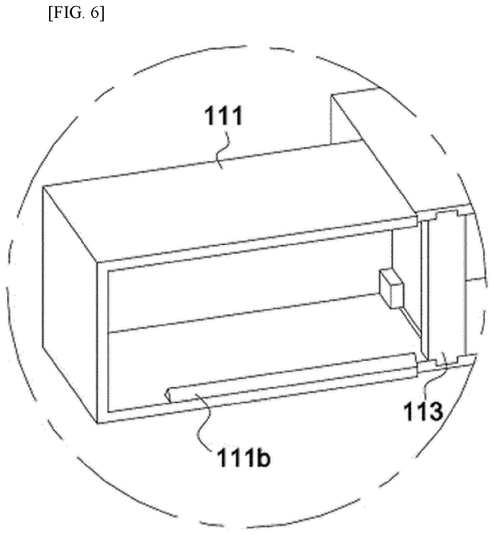

FIG. 6 is a cutaway perspective view illustrating an insertion section according to one embodiment of the present invention.

The insertion section 111 provides a space for moving the storage unit 20 closer to the operation unit. To this end, the insertion section 111 includes a first pressurizing movement unit 111a that applies pressure to move the storage unit 20 and a first guide unit 111b that guides the storage unit to a correct position, and is provided in a box shape connected/disconnected with the standby section by opening/closing of the first opening/closing unit 113.

The first pressurizing movement unit 111a is configured to move the storage unit 20, which has moved from outside the target material inlet 110 into the inlet, closer to the operation unit. Here, the movement of the storage unit 20 is accomplished through pushing by the first pressurizing movement unit 111a. To this end, the first pressurizing movement unit 111a may be provided with a hydraulic or electric pusher that receives a driving force from a separate operating means and presses and moves a pipe at its end, but the present invention is not limited thereto. The first pressurizing movement unit 111a may be configured to approach the operation unit from outside the insertion section 111 for easy pressurizing movement of the storage unit 20.

The first guide unit 111b provides a path for more accurate guided movement during the movement of the storage unit 20 by the first pressurizing movement unit 111a. To this end, the first guide unit 111b is formed in the insertion section 111, protrudes upward from the lower surface of the insertion section 111, and is formed in a longitudinal direction toward the standby section and the operation unit.

The first guide unit 111b is formed to be inserted into a lower guide groove 25b formed in a body 21 of the storage unit 20. Specifically, the cross-sectional shape of the first guide unit 111b is formed to be compatible with the cross-sectional shape of the lower guide groove 25b. Therefore, when the first guide unit 111b engages with the lower guide groove 25b, the storage unit 20 can move along a longitudinal direction of the first guide unit 111b.

According to another embodiment of the present invention, the first guide unit 111b may be configured in a wedge shape having a triangular cross-section. Accordingly, easier guided movement of the storage unit 20 is possible, and detachment of the storage unit 20 from the first guide unit 111b during the guiding process may be prevented in advance. Meanwhile, a second guide unit 112b-1 with the same shape as the first guide unit 111b may be disposed above a moving compartment 112b located in the standby section.

The heating control unit according to the present invention induces activation of a cracking phenomenon that fragments the target material by controlling at least one of the heating rate and heating time of the heating unit.

Predetermined heating rate-associated information is prestored in the heating control unit, which controls the heating rate of the heating unit based on the heating rate-associated information. Here, the heating rate of the heating unit may be confirmed through Comparative Examples 1 and 2, and Example 1. In addition, the input amount, input type, heating method, heating time, and analysis method of the target material for measuring the optimal heating rate of the heating unit are the same, and the reduction degree of the target material is compared by varying the heating rate.

### Comparative Example 1

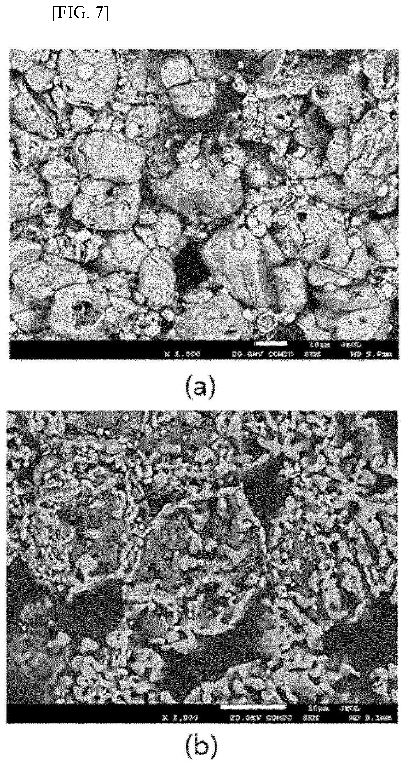

After inputting the target material into the operation unit, the heating rate of the heating unit was set to 20 k/min to heat the target material, and at 30 and 40 minutes after the start of heating the target material, samples were collected from the target material, and SEM-BSE analysis was performed. The analysis results of Comparative Example 1 are the same as in FIGS. 7A and 7B. Here, the operating temperature for recycling the target material is set to 850 °C, which also is applied to both Comparative Example 2 and Example 1.

Thirty minutes after the start of heating, at the heating rate of 20 k/min, the cracking of the target material is minimal as shown in FIG. 7A. Accordingly, it can be confirmed that the reduction degree of the target material is also minimal after 40 minutes, as shown in FIG. 7B.

### Comparative Example 2

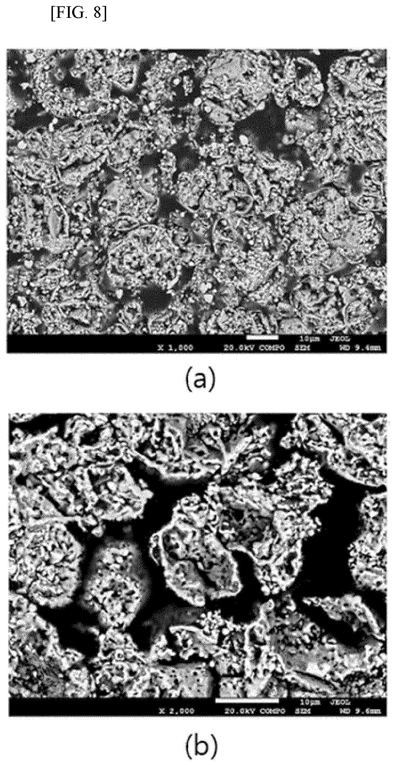

After inputting the target material into the operation unit, the heating rate of the heating unit was set to 30 k/min to heat the target material, and at 30 and 40 minutes after the start of heating the target material, samples were collected from the target material, and SEM-BSE analysis was performed. The analysis results of Comparative Example 2 are the same as in FIGS. 8A and 8B.

Thirty minutes after start of heating the target material, as shown in FIG. 8A, it can be confirmed that more cracks occur in the target material compared to Comparative Example 1, and as shown in FIG. 8B, after 40 minutes, it can be confirmed that greater reduction of the target material occurs.

Accordingly, when the target material is heated at a higher heating rate than that of Comparative Example 1, it can be confirmed that the cracking phenomenon of the target material needs to sufficiently occur such that the predetermined gas consisting of a reducing gas is introduced into the target material.

### Example 1

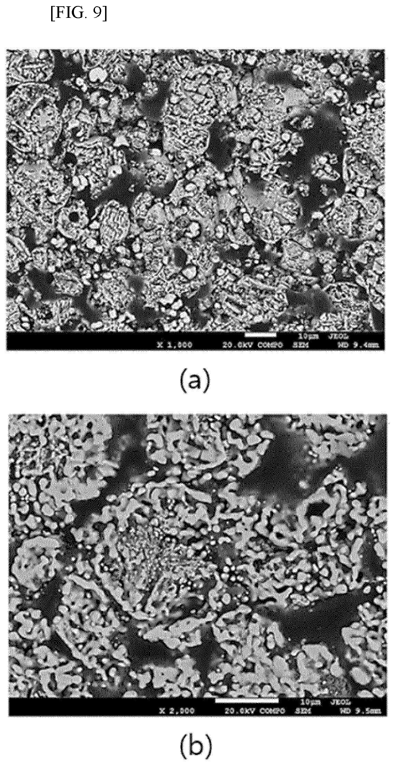

After inputting the target material into the operation unit, the heating rate of the heating unit was set to 22 K/min to heat the target material, and at 30 and 40 minutes after the start of heating the target material, samples were collected from the target material, and SEM-BSE analysis was performed. The analysis results thereof are the same as in FIG. 9A and 9B.

Referring to FIG. 9A, it can be confirmed that more cracks occur in the target material compared to Comparative Example 1, and there is no significant difference from Comparative Example 2. In addition, referring to FIG. 9B, it can be confirmed that greater reduction in the target material occurs compared to Comparative Example 1, and there is little difference from Comparative Example 2.

Accordingly, it can be confirmed that the optimal heating temperature for the target material is 22 K/min or higher. It can be confirmed that the recovery rate of cobalt that can be recovered from the target material in Comparative Example 1 is 70%, but the recovery rate of cobalt in Example 1 is 95%.

The heating control unit may control the heating of the heating unit for a heating time based on the optimal heating rate, thereby inducing the predetermined gas to penetrate into and easily reduce the target material.

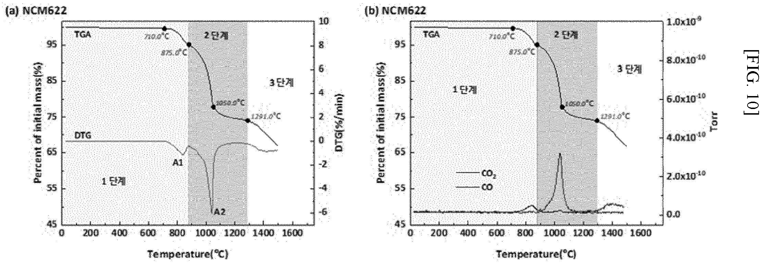

Hereinafter, with reference to FIGS. 10 to 12, heat treatment conditions for obtaining valuable metals from spent batteries will be described below.

According to one embodiment of the present invention, the storage unit 20 containing the target material may be introduced through the target material inlet 110 in the heat treatment device 100. More specifically, the storage unit 20 may be introduced into the insertion section 111 and move to the operation unit via the standby section. The storage unit is heat-treated in the operation unit.

According to various embodiments, the heat treatment device 100 may include the operation unit where the material is heat-treated. In an embodiment, the operation unit may be characterized by a vertical structure moving one or more storage units in a vertical direction.

The operation unit may include a sensor module for measuring the type and partial pressure of the internal gas.

In one embodiment, the heat treatment device 100 may be characterized by performing heat treatment on the target material based on predetermined conditions. According to embodiments, the heating control unit may perform control related to determining a heating temperature, adjusting a heating rate, and adjusting the partial pressure of the gas in the operation unit.

According to one embodiment, the heating control unit may control the heating unit to perform heat treatment on the target material based on the predetermined conditions. Here, the predetermined conditions may include the temperature condition that the temperature corresponding to the heat treatment ranges from 875 to 1050 °C.

For example, the heating control unit may control the heating unit to maintain the internal temperature of the operation unit at 900 °C.

In another example, the heating control unit may control the heating rate of the operation unit to 22 K/min or higher. That is, the heating control unit may control the heating of the heating unit for a heating time based on the optimal heating rate, thereby inducing active reduction of the target material.

In another example, the heating control unit may control heat treatment to be performed under a mixed reducing gas atmosphere containing carbon dioxide and carbon monoxide, which is adjusted to have a log(PCO₂/PCO) value of -1.20 to 2.00.

In a specific embodiment, the heating control unit may be characterized by performing heat treatment on the target material based on a predetermined temperature condition. The predetermined temperature condition may be related to the temperature range for maximizing the recovery rate of valuable metals, and mean the heat treatment of the target material within the range of 875 to 1050 °C.

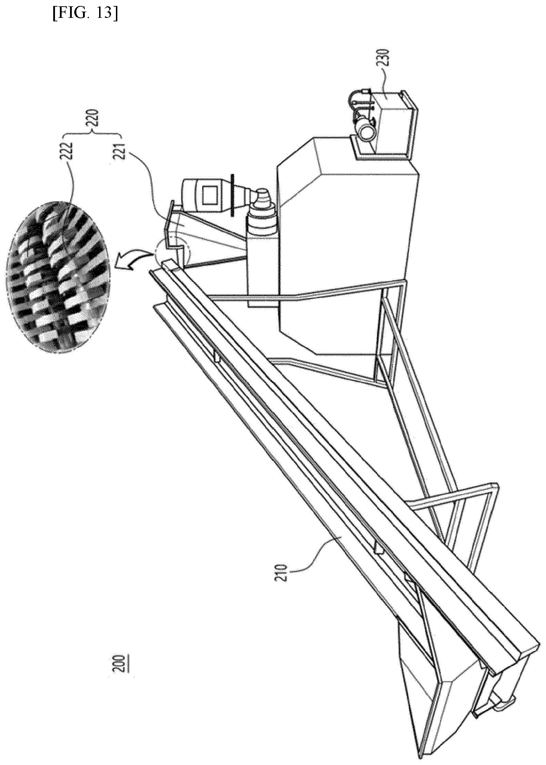

More specifically, a graph obtained by performing thermogravimetry (TG) and derivative thermogravimetry (DTG) on NCM composite pellets may be as shown in FIG. 10. In one embodiment, the NCM composite pellets may mean NCM622 composite pellets including an NCM622 positive electrode material and black powder (1:1.53). FIG. 13 shows experimental values related to the results of TG and DTG performed on the NCM622 composite pellets as a target material.

In one embodiment, NCM may mean a positive electrode material consisting of nickel, cobalt, and manganese. The positive electrode material is a critical factor for determining battery performance. In one example, to increase energy density, it is necessary to maximize the energy density of the positive electrode material. Positive electrode materials exhibiting performance suitable for a battery may include nickel, manganese, cobalt, and aluminum. Here, nickel serves to improve high-capacity characteristics, manganese and cobalt serve to improve stability, and aluminum serves to improve output characteristics. Such positive electrode materials are prepared by the combination of movable materials in various proportions, and the technology of combining positive electrode active materials is directly linked to the competitiveness of battery manufacturers. For example, the higher the nickel content in the positive electrode material, the easier the increase in battery capacity. However, since stability decreases as the nickel content is high, securing stability while increasing nickel content is extremely important in positive electrode material technology.

Meanwhile, two types of positive electrode materials, NCM and NCA, are largely dominating the market. NCM is a positive electrode material that is widely used in secondary batteries, and has a layered lattice structure. NCM is a positive electrode active material having a layered structure of its constituent elements, and during battery charging, lithium ions migrate between crystal lattice layers and are stored in graphite serving as a negative electrode active material. In this case, since a large amount of lithium ions can be stored between wide and flat interlayers, NCM has the advantage of high energy capacity; however, its stability may decrease during high-voltage charging.

The positive electrode active material NCM622 related to FIG. 10 may consist of 60% nickel, 20% cobalt, and 20% manganese.

TG may be an analysis method for measuring a weight change occurring with physical and chemical changes during heating of a sample (i.e., the target material of the present invention (NCM622 composite pellets)) at a constant rate. Physical changes such as melting or vaporization may occur at a specific temperature, and chemical changes such as decomposition, oxidation, reduction, or isomerization of a material may occur at high temperatures.

In one embodiment, for active reduction of NCM622, heating is preferably performed based on the heating rate of 22 K/min. From the weight curve that occurs according to temperature changes during heating of the sample, an intermediate product may be identified along with acquisition of information on thermal stability and compositional changes.

Meanwhile, the maximum rate corresponding to weight loss appear at the inflection point of the curve; however, when multiple reactions overlap, it may be difficult to accurately identify the exact maximum reaction rate from a complex TG curve. Therefore, DTG was additionally performed, and its results are shown in FIG. 10.

While DTG utilizes the same instrument as TG, the DTG results may be plotted as the first derivative curve of the TG curve with respect to time or temperature. DTG is used to plot the rate of weight loss with respect to temperature in a TG curve, i.e., the derivative of the curve, and the DTG curve may consist of peaks corresponding to respective steps of the decomposition. The DTG curve may be displayed with the vertical axis representing a mass loss rate and the horizontal axis representing an increasing temperature.

Accordingly, the temperature at the inflection point of the TG curve representing the maximum weight loss rate may be the maximum value of the peak in the DTG curve. In addition, in one embodiment, the area of the DTG peak may refer to a weight loss rate at each step. In other words, kinetic analysis of the reaction may be facilitated through DTG.

In a specific embodiment, during heating of the target material (i.e., NCM622 composite pellets), mass losses occur due to chemical reactions, and continuous decomposition results in mass loss. Since this chemical reaction is a temperature-dependent kinetic process, the change in mass does not occur only at a constant temperature, and may occur over a range as shown in FIG. 10.

### Step 1

LiNiₓMn_{y}Co_{z}O₂ + αC -> (2-y)/4Li₂O + xNiO + y/2LiMn₂O₄ + z/3Co₃O₄+ αCO₂ (1)

12LiMn₂O₄ + 5C -> 6Li₂O + 8Mn₃O₄ + 5CO_{2(g)} (2)

Mn₃O₄ + 1/2C -> 3MnO + 1/2CO_{2(g)} (3)

Co₃O₄ + 1/2C -> 3CoO + 1/2CO_{2(g)} (4)

$α = 2 - \left(\frac{12 x + 21 y + 16 z + 6}{12}\right)$

In the Step 1 section (0 to 875 °C) of FIG. 10, the chemical reactions corresponding to the above chemical equations may mainly occur.

Referring to the above reaction equations, it can be confirmed that the reduction of nickel and manganese occurs in the Step 1 section, and most of NCM622 is changed into lithium oxide and manganese oxide. In addition, based on the above chemical equations, theoretically, a 4.8% mass loss is observed in the Step 1 section. Compared to this, a 4.78% mass loss is observed in the actual experimental results (i.e., FIG. 10A).

In one embodiment, in the Step 1 section, the structure of NCM622 may be sequentially transformed from the layered structure to a spinel structure and a rock-salt structure due to the change in temperature.

In addition, in the Step 2 section, by the chemical reactions corresponding to the chemical equations below, the Boudouard reaction and the indirect reduction of a metal oxide may occur.

C + CO_{2(g)} -> 2CO_{(g)} (5)

MO + CO_{(g)} -> M + CO_{2(g)} (M=Ni, Co) (6)

MO + C -> M + CO(g) (M=Ni, Co) (7)

The Boudouard reaction refers to the redox reaction of a chemical equilibrium mixture of carbon monoxide and carbon dioxide at a given temperature, and corresponds to the above chemical equation (5). Large amounts of carbo monoxide may be released, and the released carbon monoxide may be utilized in the subsequent indirect reduction process.

Specifically, for the indirect reduction (i.e., the chemical reaction corresponding to chemical equation (6)), a large amount of carbon monoxide (CO) is required. In other words, nickel oxide and cobalt oxide may react with carbon monoxide to be indirectly reduced into nickel, cobalt, and carbon dioxide (CO₂). Referring to FIG. 10B showing changes in partial pressure of carbon monoxide and carbon dioxide with respect to temperature, it can be confirmed that the amount of carbon monoxide is sharply increased by the Boudouard reaction in the Step 2 section. The carbon monoxide released by the Boudouard reaction may generate nickel, cobalt, and carbon dioxide through the indirect reduction of metal oxides (i.e., nickel oxide (NiO) and cobalt oxide (CoO)), and the amount of carbon monoxide, which had sharply increased through this reaction, may be confirmed to sharply decrease.

Chemical equation (7) may represent the entire reaction considering indirect reduction (combination of chemical equation (5) and chemical equation (6)) through acceleration of the Boudouard reaction.

In the Step 2 section, as shown in FIG. 10, a 26.08% cumulative mass loss was observed along with the generation of carbon monoxide. That is, the amounts of nickel and cobalt changed by the reaction may be maximized at 875 to 1050 °C. In other words, the optimal temperature at which the conversion into nickel and cobalt occur may range from 875 to 1050 °C.

According to an embodiment, as confirmed in FIG. 10, when the heat treatment temperature of the target material is less than 875 °C, the Boudouard reaction and the indirect reduction of a metal oxide do not occur and thus the change into nickel and cobalt may not be accelerated. Additionally, as confirmed from FIG. 10B, when the heat treatment temperature of the target material exceeds 1050 °C (DTG inflection point), a decrease in the rate of mass loss can be observed in the DTG curve. This may indicate that the rates of conversion to nickel and cobalt decrease when the heat treatment temperature of the target material exceeds 1050 °C. In other words, to accelerate the conversion into nickel and cobalt, it is preferable that heat treatment is performed without exceeding 1050 °C. In addition, according to an embodiment, when the heat treatment temperature exceeds 1100 °C, since copper melts and adheres to the pellets, which may cause a sharp decrease in the reduction rate, the temperature during the heat treatment should not exceed 1100 °C. More preferably, to accelerate the conversion into nickel and cobalt, the temperature during the heat treatment should be controlled not to exceed 1050 °C.

According to one embodiment of the present invention, the predetermined conditions may include a partial pressure increase condition corresponding to a range where an increment in partial pressure of carbon monoxide exceeds a predetermined threshold partial pressure change. Referring to FIG. 10B and chemical equations (5) and (6), carbon monoxide is required for the conversion into nickel and cobalt.

MO + CO_{(g)} -> M + CO_{2(g)} (M=Ni, Co) (6)

Specifically, for the chemical reaction as shown in chemical equation (6), carbon monoxide may be required. That is, for the conversion into nickel and cobalt, a large amount of carbon monoxide is needed. This carbon monoxide may be generated through the chemical reaction related to chemical equation (5), i.e., the Boudouard reaction.

C + CO_{2(g)} -> 2CO_{(g)} (5)

That is, carbon monoxide sharply increases at the onset of the Boudouard reaction, resulting in the generation of nickel and cobalt.

Accordingly, the heating control unit may perform heat treatment on the target material at the temperature corresponding to a range in which the increment in partial pressure of carbon monoxide exceeds a predetermined threshold partial pressure change. For example, the heating control unit may perform heat treatment on the target material based on the temperature range from the point of a sharp increase in the change in carbon monoxide (i.e., the point at which the increment exceeds a predetermined threshold change) to the point where it changes from an increasing trend to a decreasing trend of the change in carbon monoxide.

According to another embodiment, the predetermined conditions may include a mass decrease condition corresponding to a range in which a decreasing change related to mass loss of the target material exceeds a predetermined threshold mass change. Referring to FIG. 10A and chemical equations (5) and (6), to accelerate the conversion into nickel and cobalt, the acceleration of the mass loss of the target material is essential.

In an embodiment, as the reaction in which nickel oxide or cobalt oxide reacts with carbon monoxide to generate nickel, cobalt, and carbon dioxide becomes more active, the amount of mass loss may sharply increase.

Accordingly, in the present invention, the heat treatment on the target material may be performed based on a temperature corresponding to the corresponding sharp mass loss range.

As a specific example, the heating control unit may perform heat treatment on the target material, based on a temperature range from the point of the sharp decrease in mass of the target material (that is, the range in which the mass loss change exceeds a predetermined threshold change) to the point of the decrease in mass change (i.e., the point at which the change in mass loss is the same as or less than the predetermined threshold change).

According to one embodiment of the present invention, the predetermined conditions may include, as described above, the temperature condition, the partial pressure increase condition, and the mass decrease condition, and the heating control unit may control the heating unit to perform heat treatment based on the combination of at least two of the predetermined conditions.

In Step 3 section, direct reduction of manganese oxide and Li₂O evaporation may occur through the chemical reactions corresponding to the following chemical equations.

MnO + C -> Mn + CO(g) (8)

Li₂O -> 2Li(g) + CO(g) (9)

That is, manganese is generated by chemical reaction (8), and lithium is generated by chemical reaction (9). According to an embodiment, the additional mass loss in Step 3 section was confirmed to be 35.53%. It can be confirmed that this mass loss was similar to 33.16%, which is the mass loss according to a TGA experiment (theoretical).

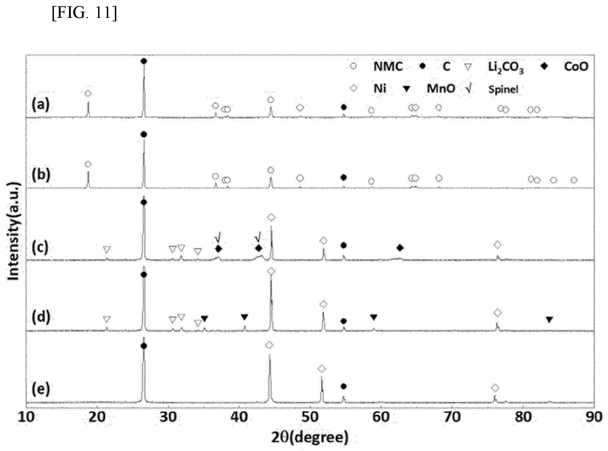

In addition, in one embodiment, the corresponding phase analysis by XRD was performed by cooling the NCM composite pellets at varying temperatures. The related results are shown in FIG. 11. FIG. 11 is a diagram illustrating the XRD patterns of a target material corresponding to various temperatures according to one embodiment of the present invention.

In one embodiment, XRD refers to X-ray diffraction, which analyzes a sample using characteristic X rays generated by the collision of high-speed electrons with target atoms. XRD may refer to an analysis method that diffracts X-rays onto a desired specimen and represents the internal information of the specimen as a graph. That is, XRD may be an analysis method that can confirm the phases in the specimen by obtaining peak values that appear at unique angles in various phases.

More specifically, XRD may induce X-rays to strike a crystal, casing diffraction in a portion thereof. In a specific embodiment, as the X-ray tube and detector move, the degree of X-ray diffraction by the sample can be recorded and plotted as a graph. FIG. 11A represents a state without separate heat treatment, FIG. 11B represents 600 °C, FIG. 11C represents 760 °C, FIG. 11D represents 960 °C, and FIG. 11E represents 1500 °C.

Referring to FIGS. 11A to 11E, it can be confirmed that nickel is observed at 760 °C or higher. That is, at a temperature less than 760 °C, nickel is not generated through a chemical reaction. Accordingly, to generate nickel, heat treatment at a temperature of at least 760 °C is essential. In addition, in one embodiment, referring to FIGS. 11B and 11C, at a temperature of 600 °C, NCM is observed, but at a temperature of 760 °C, reduction of NCM through a chemical reaction can be observed. That is, it can be confirmed that the decomposition peak of LiNiₓMn_{y}Co_{z}O₂ is first observed in FIG. 11C.

In various embodiments, as described above, it can be confirmed that nickel is formed at a temperature of 760 °C or higher, but referring to FIG. 10 and chemical equations (5) and (6), the temperature of 875 °C or higher at which carbon monoxide sharply increases may be a range that accelerates nickel generation. The present invention may be characterized by performing heat treatment at 875 °C or higher to accelerate nickel generation. To this end, when heat treatment is performed on spent batteries at 875 °C or higher, nickel generation may be accelerated.

In various embodiments, XRD results (i.e., related FIG. 11E) for reduced pellets after an experiment exposed to temperatures up to 1500 °C can show that excessively high temperatures cause Li₂O evaporation, resulting in no observable lithium in the XRD pattern.

According to one embodiment, when the temperature exceeds 1100 °C, since copper melts and adheres to the pellets, which may cause a sharp decrease in the reduction rate, the temperature during the heat treatment should not exceed 1100 °C.

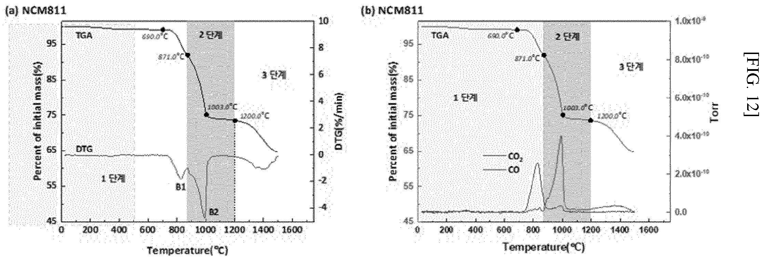

In one embodiment, when TG and DTG were performed on NCM811 composite pellets containing an NCM811 positive electrode material consisting of different proportions of nickel, cobalt and manganese, and black powder (1: 1.53), the results may be the same as shown in FIG. 12. FIG. 12 shows experimental values related to the results of TG and DTG performed on NCM811 composite pellets as a target material. That is, FIG. 12 is a view related to the experimental values corresponding to the case in which a nickel content is high and manganese and cobalt contents are low. NCM811 related to FIG. 12 may be a battery consisting of 80% nickel, 10% cobalt, and 10% manganese. The experiment related to FIG. 12 was conducted by the same method as the experiment related to FIG. 10 except that NCM622 composite pellets were replaced with NCM811 composite pellets.

In one embodiment, since nickel is related to high-capacity characteristics, and manganese and cobalt are related to improved stability, NCM811 may have high capacity characteristics compared to NCM622, but stability may be slightly lower.

Referring to FIG. 12, it can be confirmed that the NCM811 composite pellets also exhibit a mass loss reaction through three steps, like the NCM622 composite pellets. It can be confirmed that, in the case of the NCM811 composite pellets, the carbon dioxide peak is observed prior to Step 2, i.e., at Step 1, due to the high nickel content and the low manganese content. Referring to FIG. 12A, the peak values of DTG can confirm the reaction is most active within the range of 875 to 1000 °C. In other words, within this range, conversion into nickel and cobalt may be accelerated. That is, for both NCM622 and NCM811, mass loss and reactions proceed in three steps, and particularly, both composite pellets can have maximum amounts of nickel and cobalt within the range of 875 to 1050 °C. As described above, as the conversion into nickel and cobalt is accelerated due to active reactivity of NCM622 and NCM811 within the above temperature range (875 to 1050 °C), the maximum recovery rates of nickel and cobalt can be confirmed. This result can demonstrate that since the same reaction may proceed in all batteries with a two-dimensional layered structure, these results may also be applied in the same manner to lithium-ion batteries (LIBs) with various layered structures, such as LCO, NMC333, and NCA, thereby exhibiting maximum recovery rates.

In other words, the optimal temperature range in which the metals nickel and cobalt are converted may range from 875 to 1050 °C. Accordingly, when the target material (i.e., spent batteries) is heat-treated within the range of 875 to 1050 °C, the recovery rates of nickel and cobalt may be maximized.

That is, the heat treatment device 100 of the present invention may heat-treat the target material under the above-described conditions (i.e., the heating rate condition, and temperature range condition). When heat treatment is performed under the heating rate condition and temperature range condition suggested in the present invention, as confirmed from the above-mentioned experimental values, the recovery rates of valuable metals may increase. According to one embodiment, the target material heat-treated by the heat treatment device 100 may be transferred to the crushing device 200 to be crushed to a certain size or greater.

According to one embodiment of the present invention, the method of recovering valuable metals from spent batteries may include obtaining a plurality of recovered materials by performing a crushing process on the target material recovered after heat treatment using a crushing device 200 (S200).

In one embodiment, the crushing process for the heat-treated target material may be performed using a crushing device 200 to be described below, or may be performed using a conventional grinding means such as a cutter mixer. That is, the crushing process of the present invention is not limited to being performed by the configuration of the crushing device to be described below.

Referring to FIG. 13, the crushing device 200 may include a conveying unit 210, a crushing unit 220, and a motor unit 230. The above-described components of the crushing device 200 are exemplary, and additional components may be added or at least some of the above-described components may be omitted.

In a specific embodiment, the crushing device 200 may include a conveying unit 210 that transfers the target material recovered after heat treatment in one direction. As shown in FIGS. 2 and 13, the conveying unit 210 may be disposed close to the target material discharge unit 150 of the heat treatment device 100, and serves to transfer the discharged target material (i.e., the heat-treated target material) in one direction. The conveying unit 210 moves the heat-treated target material, which has been discharged from the target material discharge unit 150, to the crushing unit 220.

In one embodiment, the crushing device 200 may include the crushing unit 220 with a plurality of blades for crushing the heat-treated target material transferred from the conveying unit. The crushing unit 220 may include, as shown in FIG. 13, a crushing housing 221 and a plurality of blades 222 included inside the crushing housing 221.

In addition, the crushing device 200 may include a motor unit 230 that applies power to the crushing unit 220. The crushing unit 220 rotates the plurality of blades using the power supplied from the motor, and crushes the target material (i.e., the heat-treated target material) through the rotation of the plurality of blades.

In one embodiment, the operation of performing a crushing process may be characterized by crushing a plurality of recovered materials to a predetermined size or larger. Here, the predetermined size may refer to a rectangular shape in which a first side has a length of 2 cm and a second side different from the first side has a length of 1 cm.

In general, in pouch-type, prismatic, or cylindrical batteries, which are common battery configurations, copper foil is stacked layer-by-layer, or wound. Even after the heat treatment reaction, the copper foil maintains this layered or wound form. Therefore, mixed powder (e.g., positive electrode active material) remains between the copper foil, thereby reducing the recovery rates of valuable metals. In other words, when the powder present between the copper foil is easily separated, recovery rates may be maximized, and to maximize the recovery rates of the present invention, the target material recovered after the heat treatment may be crushed to a certain size or greater.

Meanwhile, to easily separate the powder remaining between the copper layers, it is necessary to crush the heat-treated target material. In this case, when the target material is crushed to an excessively small size, copper is mixed with the powder and thus is more difficult to be separated. For example, when the target material is finely ground, it becomes more difficult to separate the copper from the powder. Therefore, the target material has to be crushed to a predetermined size. The crushing process of the present invention may refer to a process of cutting the target material to a certain size or larger, that is, a predetermined size, rather than a process of finely grinding the target material. In a preferred embodiment, the predetermined size in the crushing process may have a first side length of 2 cm and a second side length of 1 cm or more, based on a rectangular shape. That is, the target material should have a rectangular size of at least 1 cm x 2 cm. When the size of the target material becomes smaller than the predetermined size, it is difficult to separate recovered materials related to graphite, copper, and a positive electrode active material constituting the target material, which lowers the recovery rates of valuable metals. Particularly, when copper is finely ground, it is more difficult to separate copper particles and recovered material particles related to the positive electrode active material.

That is, the crushing device 200 of the present invention may crush the target material to a predetermined size such that each recovered material constituting the target material is more easily separated in the subsequent sieving process. In other words, the plurality of recovered materials (i.e., fragments of the target material) transferred to a sieving device 300 through the crushing process may have a rectangular shape with a size of at least 1 cm x 2 cm.

According to one embodiment of the present invention, the method of recovering valuable metals from spent batteries may include obtaining a plurality of separated fractions containing different sizes of particles by performing a sieving process on a plurality of recovered materials using the sieving device 300.

According to one embodiment, the sieving device 300 may be a device for separating the plurality of recovered materials by particle size. The sieving device 300 may separate the target material that has been crushed to a predetermined size into a plurality of separated fractions using the crushing device 200. The sieving device 300 may be configured to perform vibratory sieving, or may include a shaking table. The sieving device 300 may filter and separate the plurality of recovered materials by particle through vibrations.

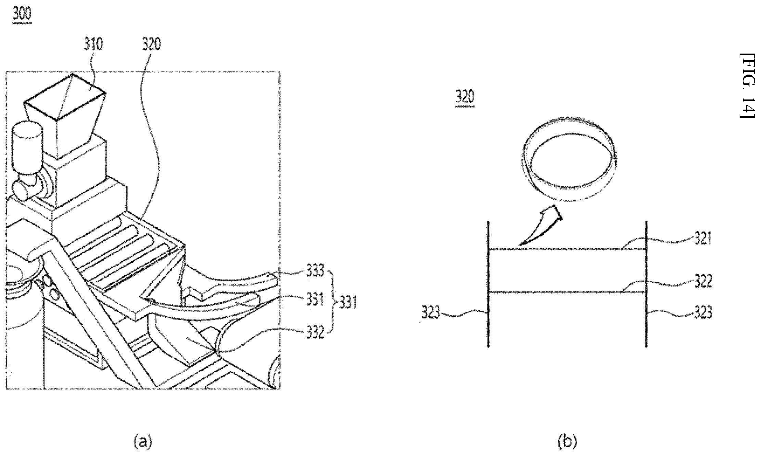

More specifically, referring to FIG. 14A, the sieving device 300 may include a recovered material inlet 310 into which the plurality of recovered materials are introduced, a sieving unit 320 for separating each of the plurality of recovered materials, and a plurality of recovered material outlets 330 through which each of the plurality of recovered materials are separated and discharged.

In one embodiment, the sieving unit 320 may include, as shown in FIG. 14B, a first screen 321 having a plurality of first holes for passing at least one of the plurality of recovered materials and a second screen 322 having a plurality of second holes for passing at least one of the plurality of recovered materials. FIG. 14B is an exemplary diagram relating to the side of the sieving unit 320.

As shown in FIG. 14B, the first screen 321 and the second screen 322 may be configured to include fine holes to function as sieves. In various embodiments, the size of the first holes formed in the first screen 321 may be characterized by being larger than that of the second holes formed in the second screen 322. In addition, the first screen 321 may be provided above the second screen. In another embodiment, the sieving unit 320 may include a screen frame 323 supporting the first screen 321 and the second screen 322.

According to one embodiment, the sieving device 300 may further include a vibration providing unit (not shown) that provides vibrations to the sieving unit 320. Vibrations are applied to the entire sieving unit 320 by the vibration providing unit, and more accurate filtering is performed through the vibrations. That is, in the sieving device, the first and second screens 321 and 322 of the sieving unit 320 may be vibrated by the vibration providing unit, and the recovered materials may be easily filtered by particle size through the vibrations.

In further detail, with reference to FIG. 14B, the sieving unit 320 may include a first screen 321 and a second screen 322 supported by the screen frame 323. The first screen 321 has a relatively larger hole than the second screen 322, and is provided above the second screen. In a specific embodiment, the diameter of the hole formed in the first screen 321 may be 1 cm. Accordingly, when a plurality of recovered materials that have been crushed to a predetermined size are transferred, among the recovered materials, a recovered material (e.g., a second recovered material) with a size of 1 cm x 2 cm is retained. Meanwhile, the diameter of the hole formed in the second screen 322 disposed below the first screen 321 may be 0.5 mm. Among the recovered materials passing through the first screen 321, powders corresponding to medium-sized particles, excluding fine powders (i.e., powders of 0.5 mm or less), are retained by the second screen 322.

In one embodiment, the target material transferred from the crushing device 200 is separated into the plurality of separated fractions using the sieving device 300. In this case, the plurality of separated fractions may refer to a first separated fraction, a second separated fraction, and a third separated fraction.

In a specific embodiment, the first separated fraction refers to medium-sized particles of the target material that has been crushed to a certain size or greater, such as a separated fraction in which copper and graphite are removed from the target material. That is, the first separated fraction is a powder corresponding to medium-sized particles retained by the second screen 322.

The second separated fraction may refer to particles of the crushed target material with a relatively large particle size, such as copper. That is, the second separated fraction is a powder corresponding to the largest particle minimally retained by the first screen 321.

The third separated fraction may refer to particles of the crushed target material with a relatively small size, such as graphite. That is, the third separated fraction is a powder with fine particles passing through both the first screen 321 and the second screen 322.

That is, the sieving device 300 may separate the target material crushed to a certain size or greater (i.e., the plurality of recovered materials) into a plurality of separated fractions by particle size.

The sieving device 300 may separate and discharge a plurality of separated fractions that have been separated by particle size through the plurality of recovered material outlets 330, respectively.

The plurality of recovered material outlets 330 may include a first recovered material outlet 331 discharging the recovered materials recovered through the first screen 321, a second recovered material outlet 332 discharging the recovered material recovered through the second screen 322, and a third recovered material outlet 333 discharging the recovered material not recovered through the first and second screens 321 and 322.

That is, the recovered material (i.e., copper) retained by the first screen 321 is discharged as a second separated fraction through the first recovered material outlet 331, the recovered material retained by the second screen 322 (i.e., the copper and graphite-removed recovered material) is discharged as a first separated fraction through the second recovered material outlet 332, and the recovered material corresponding to the fine powder passing through the first and second screens 321 and 322 (i.e., graphite) is discharged as a third separated fraction through the third recovered material outlet 333.

According to the classification results of the sieving device 300, copper and graphite are automatically separated and discharged, and the first separated fraction from which copper and graphite have been removed is then transferred to the leaching device 400. In other words, the sieving device 300 may separate the recovered materials crushed (cut) to a predetermined size and recover copper and graphite utilizing a plurality of screens to which vibrations are applied and a plurality of recovered material outlets, and then transfer the first recovered material to an additional process step, thereby recovering residual valuable metals. The first separated fraction sequentially undergoes a leaching process, a grinding process, a magnetic separation process, and a specific gravity separation process after moving to the leaching device 400, and residual valuable metals are recovered according to the following process.

According to one embodiment of the present invention, the method of recovering valuable metals from spent batteries may include obtaining valuable metal oxides by separating lithium carbonate from the first separated fraction through the leaching process performed on the first separated fraction of the plurality of separated fractions using the leaching device 400 (S400).

The leaching device 400 separates lithium carbonate from the first separated fraction through the leaching process for the transferred first separated fraction. According to one embodiment, the leaching device 400 separates liquid-phase lithium carbonate (Li₂CO₃) and solid-phase valuable metal oxides through the leaching process related to a water-leaching process using distilled water. Water leaching may employ a magnetic bar and distilled water without impurities as a solvent. The water leaching time and the ratio of the first separated fraction and distilled water may be set to optimal conditions in consideration of the reaction between lithium carbonate and distilled water. In one embodiment, the reaction rate of lithium carbonate increases as the ratio of distilled water to the first separated fraction is high, or the water leaching time increases.

During the leaching process, while lithium carbonate dissolves in water and changes into an aqueous solution, the first separated fraction remains in a solid powder form. The solution in which the first separated fraction is mixed through agitation may be filtered through a filter, thereby separating the liquid-phase lithium carbonate and the solid-phase valuable metal oxides. The separated liquid may be subjected to a drying process (e.g., spray drying), resulting in the recovery of lithium carbonate powder.

The solid-phase valuable metal oxides separated in the leaching process may be transferred to the grinding device 500, and micronized through a grinding process. Finely grinding the valuable metal oxides may be intended to separate the components constituting the valuable metal oxides.

In a specific embodiment, the leaching device 400 may include a supply tank 410, a liquid supply unit 420, a mixing unit 430, a filter 440, and a leaching discharge unit 450. The components of the above-described leaching device 400 are exemplary, and additional components may be added or at least some of the above-described components may be omitted.

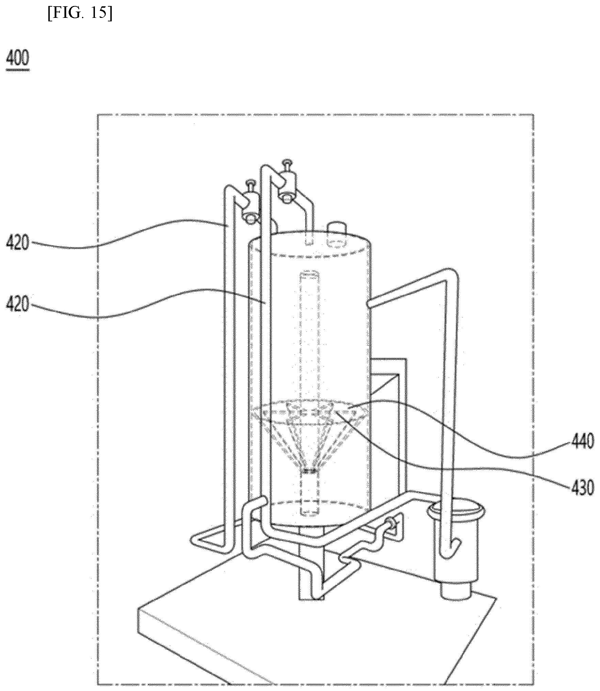

As shown in FIG. 15, the supply tank 410 of the leaching device 400 may provide a space for agitating the first separated fraction and a liquid, and is configured in a cylindrical shape.

Referring to FIG. 2, the first recovered material discharged through the second recovered material outlet 332 is transferred into the supply tank by the conveying device. The leaching device 400 may include the liquid supply unit 420 supplying a liquid into the supply tank 410. That is, in the supply tank 410, the first recovered material separated by the sieving device 300 and the liquid (i.e., distilled water) supplied by the liquid supply unit 420 are agitated.

In one embodiment, the leaching device 400 may include the mixing unit 430 provided inside the supply tank 410 and configured to mix the liquid and the first separated fraction by rotation. In various embodiments, the leaching device 40 may include a rotational supply unit that applies a rotational force, and the mixing unit 430 may rotate based on the rotational force applied form the rotational supply unit. The rotational supply unit may include, for example, a motor, which is configured to generate a driving force. The mixing unit 430 may be rotatably disposed inside the supply tank 410, and may be driven to rotate by the rotational force applied from the rotational supply unit. As shown in FIG. 15, the mixing unit 430 may have a single-step shape, and disposed at a predetermined interval. That is, through rotation of the single-stepped mixing unit 430, distilled water and the first separated fraction are easily agitated.

According to one embodiment, the leaching device 400 may include the filter 440 that filters a solid material from the mixture of the liquid and the first separated fraction. The filter 440 may have a funnel structure that narrows toward the center, and is configured to filter moisture. While rotating the mixing unit 430, the first separated fraction and distilled water are agitated, and thereby lithium carbonate dissolves in the liquid (i.e., distilled water) and changes to an aqueous solution. The liquid in which lithium carbonate is dissolved is discharged outside the filter 440, and only the solid-phase first separated fraction remains after being filtered through the filter 440. In this case, the solid-phase first separated fraction may be a lithium carbonate-removed valuable metal oxide.

The reaction equation when lithium carbonate dissolves in distilled water is as shown in the following chemical equation.

Li₂CO₃ = Li²⁺+ CO₃²⁻

Before the reaction, lithium carbonate is in a solid state, and after the reaction, it is in a liquid state. Since valuable metal oxides, such as NiO, CoO, and MnO, are insoluble in water, after leaching, Li₂CO₃ is dissolved in water and changes to an aqueous solution, and NiO, CoO and MnO may remain in a solid powder state.

That is, the solution in which the first separated fraction is mixed by agitation may be filtered through a filter, and therefore, the liquid-phase lithium carbonate and the solid-phase valuable metal oxides may be separated. The separated liquid may be subjected to a drying process (e.g., spray drying), resulting in the recovery of lithium carbonate powder.

As shown in FIG. 2, the results of separating into lithium carbonate and the first separated fraction from which lithium carbonate is removed, that is, valuable metal oxides, in the leaching device 400 may be discharged through a plurality of leaching discharge units, respectively. In this case, the valuable metal oxides may be discharged through the first leaching discharge units, and micronized by the grinding device 500.

According to one embodiment of the present invention, the method of recovering valuable metals from spent batteries may include micronizing the valuable metal oxides through a grinding process by a grinding device 500 (S500).

The grinding device 500 is configured to finely grind the valuable metal oxides to facilitate magnetic separation. The grinding device 500 may grind the valuable metal oxides to a uniform size.

In one embodiment, in the grinding process, a process of grinding the material more finely than in the previous crushing process is performed. In the grinding process, particles must be finely ground so that nickel and cobalt may be more accurately separated in the subsequent magnetic separation process.

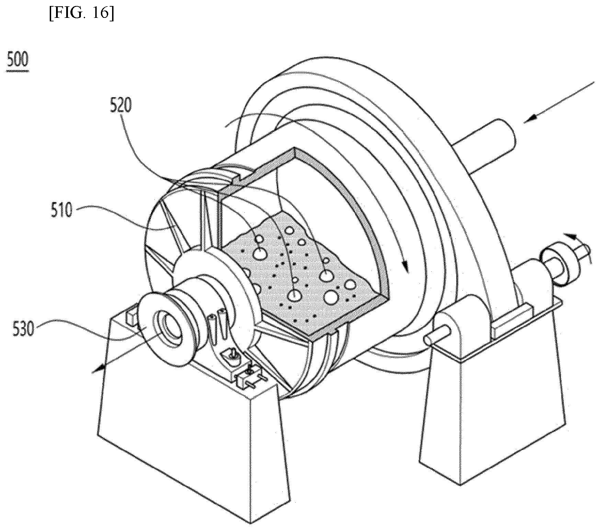

The grinding device 500 may include a container 510, balls 520, and a driving unit. Specifically, the grinding device 500 may include, as shown in FIG. 16, a container 510 forming an internal space. In addition, the grinding device 500 may include balls 520 disposed in the container. The balls may be formed of stainless steel or ceramic, and may finely grind the valuable metal oxides through collisions and friction with the valuable metal oxides. In addition, the grinding device 500 may include a driving unit that applies a rotational force to the container. The grinding device 500 performs the grinding process by rotating the container 510 so as to cause collisions and friction between the valuable metal oxides and the balls.

The container 510 may finely grind the valuable metal oxides while maintaining a constant rotational speed and time. According to one embodiment, the sizes of the resulting ground products may vary according to the size of the balls 520 and the hardness of the material. In addition, as grinding progresses, the valuable metal oxides may become smaller and have higher surface areas, which can induce chemical reactions or changes in material properties. The grinding device 500 has high productivity and can be easily operated.

Referring to FIG. 2, the valuable metal oxides micronized by the grinding device 500 are transferred to a magnetic separation device 600.

According to one embodiment of the present invention, the method of recovering valuable metals from spent batteries may include obtaining a mixed powder from the micronized valuable metal oxides through the magnetic separation process using the magnetic separation device 600 (S600).

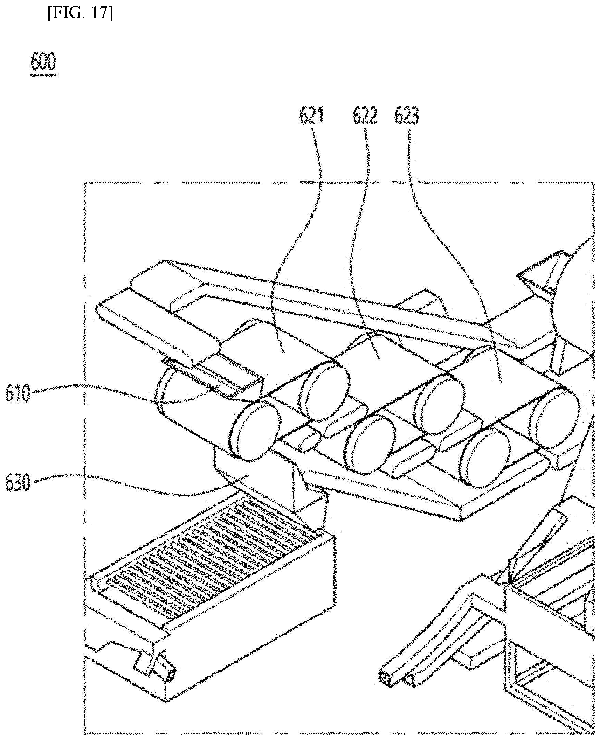

According to one embodiment, the mixed powder may be a powder of magnetic metals, for example, Ni-Co powder, but the present invention is not limited thereto. In various embodiments, when the spent batteries are NMC batteries, the mixed powder obtained in the corresponding process may be Ni-Co alloy powder. Meanwhile, when the spent batteries are LCO and LFP batteries, the mixed powder obtained in the corresponding process may include at least one of Ni, Co, Fe, Fe-C, and Fe-P. In other words, depending on the type of spent batteries used for the recovery of valuable metals, the type of mixed powder obtained in the corresponding process may vary. The magnetic separation device 600 may include, as shown in FIG. 17, an oxide inlet 610, a magnetic field-generating unit 620, and an oxide discharge unit 630. Specifically, the magnetic separation device 600 may include an oxide inlet 610 into which the micronized valuable metal oxides are introduced. In addition, the magnetic separation device 600 may include a magnetic field-generating unit 620 that generates a magnetic field to obtain a metal powder from the valuable metal oxides. In a specific embodiment, the magnetic field-generating unit 620 may be characterized by generating a magnetic field with a certain level or less of strength. When the magnetic field-generating unit 620 generates an excessively large magnetic field, in the process of separating the magnetic materials from the valuable metal oxides, other non-magnetic materials are excessively entrained with the magnetic materials. Accordingly, the magnetic field-generating unit 620 is preferably controlled to generate a magnetic field with a strength of 4000 gauss or less.

The micronized valuable metal oxides are transferred to the magnetic separation device 600, which obtains a mixed powder using a magnetic force. The magnetic separation device 600 separates the micronized valuable metals into a mixed powder having magnetic properties and non-magnetic materials using a magnetic field generated by an electromagnet or a permanent magnet. In one embodiment, the magnetic separation device may include a storage for temporarily storing a residue and a conveyor belt for classifying the valuable metal oxides into magnetic and non-magnetic materials and transferring them from the storage.

In one embodiment, the magnetic field-generating unit 620 may include a plurality of magnetic field-generating modules that generate magnetic fields of different magnitudes. The magnetic field-generating unit 620 may be characterized by obtaining metal powder multiple times in stages using each magnetic field-generating module.

In further detail, with reference to FIGS. 2 and 17, when a first magnetic field-generating module 621 is driven by a roller in the direction indicated by the arrow, the valuable metal oxides may be transferred, and magnetic separation may be performed such that, due to the magnetic field generated by an electromagnet or a permanent magnet mounted on the roller, the valuable metal oxides may fall from the end of the first magnetic field-generating module and become spatially separated into a first valuable metal oxide interacting with the magnetic field and a second valuable metal oxide not interacting with the magnetic field according to the difference in their falling trajectories between the first and second valuable metal oxides, thereby easily separating the oxides.

Particularly, the magnetic separation device 600 of the present invention may further include, as shown in FIGS. 2 and 17, a second magnetic field-generating module 622 and a third magnetic field-generating module 623, and the above-described magnetic separation may be repeatedly performed.

According to one embodiment, the first magnetic field-generating module 621, the second magnetic field-generating module 622, and the third magnetic field-generating module 623 may be characterized by generating magnetic fields of different magnitudes.

More specifically, as the magnetic separation progresses, it may be performed by each magnetic field-generating module using a higher magnetic field. That is, a second magnetic field generated by the second magnetic field-generating module 622 performing the second-stage magnetic separation is controlled to be greater than a first magnetic field generated by the first magnetic field-generating module 621 performing the first-stage magnetic separation, and a third magnetic field generated by the third magnetic field-generating module 623 performing the third-stage magnetic separation is controlled to be greater than the second magnetic field generated by the second magnetic field-generating module 622 performing the second-stage magnetic separation.

The separating the magnetic material using a higher magnetic field as the magnetic separation progresses may minimize the entrainment of non-magnetic materials. That is, the magnetic materials may be gradually separated according to size by progressively increasing the magnetic field in a stepwise manner, thereby minimizing the co-entrainment of non-magnetic materials with the magnetic materials. Therefore, high-purity magnetic materials (e.g., nickel and cobalt) may be recovered, and the recovery rates of a plurality of sub-oxides (e.g., aluminum oxide, manganese oxide, and aluminum dross) obtained in the subsequent process may increase.

In a specific embodiment, the first magnetic field-generating module 621 may be controlled to generate a magnetic field of 500 gauss, the second magnetic field-generating module 622 may be controlled to generate a magnetic field of 1000 gauss, and the third magnetic field-generating module 623 may be controlled to generate a magnetic field of 2000 gauss.

As described above, the magnetic separation device 600 of the present invention may sequentially perform magnetic separation using each magnetic field-generating module generating a different magnetic field, thereby minimizing the misclassification of non-magnetic materials as magnetic materials (i.e., separation of oxides into mixed powder).

The magnetic mixed powder is separated from the micronized valuable metal oxides by magnetic separation using the magnetic separation device 600, and the valuable metal oxides from which the mixed powder has been removed are transferred to a specific gravity separation device 700. In other words, nickel and cobalt are recovered by the magnetic separation.

According to one embodiment of the present invention, the method of recovering valuable metals from spent batteries may include separating the valuable metal oxides from which the mixed powder has been removed into a plurality of sub-oxides based on the difference in specific gravity between the components using the specific gravity separation device 700 (S700).

According to one embodiment, the specific gravity separation device 700 may include a table unit 710, a vibration providing unit, and a plurality of separation-discharge units 720.

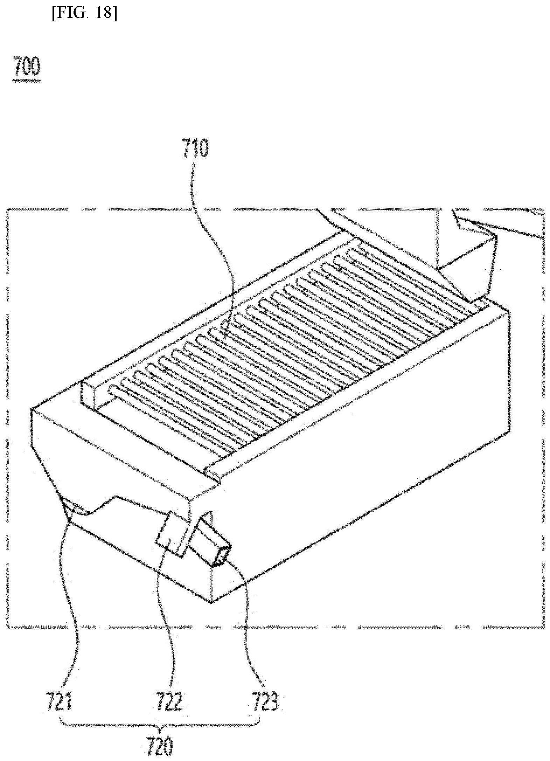

Referring to FIG. 18, the table unit 710 of the specific gravity separation device 700 may be configured to have an inclined surface at a predetermined angle.

The vibration providing unit may provide vibrations to the table unit 710, and is configured to progressively move the valuable metal oxides located on the upper surface of the table unit 710 by the provided vibrations.

The plurality of separation-discharge units 720 may be provided in a state of being connected to the table unit 710, and characterized by separating and discharging a plurality of sub-oxides separated by specific gravity.

More specifically, the specific gravity separation device 700 may separate the valuable metal oxides into a plurality of sub-oxides through specific gravity-based separation of the valuable metal oxides. In one embodiment, the plurality of sub-oxides may include first to third sub-oxides, which are related to lithium aluminum oxide, manganese oxide, and aluminum dross, respectively. That is, the specific gravity separation device 700 may separate and discharge the valuable metal oxides from which nickel-cobalt powder has been removed into lithium aluminum oxide, manganese oxide, and aluminum dross by specific gravity.

The sub-oxides separated by specific gravity are automatically classified and discharged by the plurality of separation-discharge units 720, respectively. According to one embodiment, lithium aluminum oxide is discharged by a first separation-discharge unit 721, manganese oxide is discharged by a second separation-discharge unit 722, and aluminum dross is discharged by a third separation-discharge unit 723.

That is, as spent batteries sequentially undergo the process steps corresponding to respective devices of the valuable metal recovery system 1000, valuable metals are obtained. Specifically, in the sieving process, graphite and copper are separated and recovered, and in the leaching process, lithium carbonate may be recovered. In addition, in the magnetic separation process, a powder related to nickel and cobalt is obtained, and in the specific gravity separation process, aluminum oxide, manganese oxide, and aluminum dross are obtained.

The valuable metal recovery system 1000 of the present invention has an advantage in that the results are sequentially classified and obtained according to the process sequence as described above, and the recovery rates of the materials may be increased through mutually complementary process steps.

For example, when the crushing process is omitted and the process proceeds to a sieving process after heat treatment, the mixed powder is not easily separated from copper, such that separation between copper, graphite, and oxides is not easily achieved. This may reduce the recovery rates of copper and graphite, consequently affecting the recovery rates of finally discharged magnetic materials (e.g., cobalt and nickel) and the plurality of sub-oxides (e.g., aluminum oxide, manganese oxide, and aluminum dross). As another example, when a magnetic separation process is not performed prior to the specific gravity separation process for specific gravity-based separation, the magnetic materials are not separated from the valuable metal oxides, it is difficult to distinguish each oxide by type in the specific gravity separation, and nickel and cobalt are separated into their respective oxides, which may reduce the recovery rate of each metal. The valuable metal recovery system 1000 of the present invention may maximize the recovery rates of the valuable metals by sequentially passing through the above-described process steps.

The description of the embodiments provided herein is intended to enable any person skilled in the art to use or practice the present invention. Various modifications to these embodiments will be apparent to those of ordinary skill in the art, and the general principles defined herein may be applied to other embodiments without departing from the scope of the present invention. Accordingly, the present invention is not to be limited to the embodiments set forth herein, but is to be accorded the broadest scope consistent with the principles and novel features disclosed herein.

### [Modes of the Invention]

The relevant details have been described in connection with the best mode for carrying out the invention described above.

### [Industrial Applicability]

The present invention can be utilized in the field of recycling of spent batteries.

## Claims

1. A method of recovering valuable metals from spent batteries, comprising:
performing heat treatment on a target material corresponding to spent lithium-ion batteries using a heat treatment device;
performing a crushing process, using a crushing device, on the recovered target material after the heat treatment to obtain a plurality of recovered materials;
performing a sieving process on the plurality of recovered materials through a sieving device to obtain a plurality of separated fractions having different particle sizes;
performing a leaching process, using a leaching device, on a first separated fraction among the plurality of separated fractions to separate lithium carbonate (Li₂CO₃) from the first separated fraction and obtain valuable metal oxides;
performing a grinding process on the valuable metal oxides using a grinding device to micronize them;
obtaining a mixed powder from the micronized valuable metal oxides through a magnetic separation process using a magnetic separation device; and
separating the valuable metal oxides from which the mixed powder has been removed into a plurality of sub-oxides based on the difference in specific gravity between the components using a specific gravity separation device.

2. The method of claim 1, wherein the heat treatment device comprises:
a target material inlet into which a storage unit containing the target material is inserted;
an operation unit connected to the target material inlet and moving the storage unit in a vertical direction;
a heating unit provided inside the operation unit to heat the target material;
a target material discharge unit located below the operation unit to discharge the heated target material; and
a heating control unit for controlling the heating unit,
wherein the heating control unit controls the heating unit based on predetermined conditions, and
the predetermined conditions include a temperature condition where the temperature corresponding to the heat treatment is within the range of 875 to 1100 °C.

3. The method of claim 1, wherein the crushing device comprises
a conveying unit that transfers the recovered target material in one direction after the heat treatment;
a crushing unit including a plurality of blades for crushing the heat-treated target material transferred from the conveying unit; and
a motor unit that applies power to the crushing unit, and
wherein the performing of a crushing process is to crush the plurality of recovered materials to a predetermined size.

4. The method of claim 1, wherein the sieving device is a device for separating the plurality of recovered materials by particle size, which comprises
a recovered material inlet into which the plurality of recovered materials are introduced;
a sieving unit configured to separate the plurality of recovered materials; and
a plurality of recovered material outlets through which the plurality of recovered materials, which are separated from one another, are discharged, and
wherein the sieving unit comprises a first screen with a plurality of first holes formed to pass at least one recovered material among the plurality of recovered materials;
a second screen with a plurality of second holes formed to pass at least one recovered material among the plurality of recovered materials;
a screen frame that supports the first and second screens; and
a vibration unit that applies vibrations to the first and second screens.

5. The method of claim 4, wherein the size of the first hole is larger than that of the second hole, and
the plurality of recovered material outlets comprise
a first recovered material outlet that discharges the recovered material recovered through the first screen;
a second recovered material outlet that discharges the recovered material recovered through the second screen; and
a third recovered material outlet that discharges recovered materials not recovered through the first and second screens.

6. The method of claim 1, wherein the leaching device comprises
a supply tank;
a liquid supply unit that supplies a liquid into the supply tank;
a mixing unit provided inside the supply tank and mixing the liquid with the first separated fraction through rotation;
a filtering unit that filters a solid-phase material from the mixture corresponding to the liquid and the first separated fraction; and
a plurality of leaching discharge units through which solid- and liquid-phase materials, constituting the mixture, are respectively discharged.

7. The method of claim 6, wherein the first separated fraction is a separated fraction from which copper and graphite are removed, and
wherein the performing of a leaching process, using a leaching device, on the first separated fraction among the plurality of separated fractions to separate lithium carbonate (Li₂CO₃) from the first separated fraction and obtain valuable metal oxides comprises obtaining the lithium carbonate by drying the liquid-phase material discharged from the mixture.

8. The method of claim 1, wherein the grinding device comprises
a container forming an internal space;
balls provided within the container; and
a driving unit applying a rotational force to the container, and
the grinding process is performed by rotating the container to cause collisions and friction between the valuable metal oxides and the balls.

9. The method of claim 1, wherein the magnetic separation device comprises
an oxide inlet into which the micronized valuable metal oxides are introduced;
a magnetic field-generating unit generating a magnetic field to obtain the mixed powder from the valuable metal oxides; and
an oxide discharge unit discharging the valuable metal oxides from which the mixed powder has been removed, and
wherein the magnetic field-generating unit comprises a plurality of magnetic field-generating modules that generate magnetic fields of different magnitudes, and obtains the metal powder in multiple stages using each magnetic field-generating module.

10. The method of claim 1, wherein the plurality of sub-oxides comprises
lithium aluminum oxide (LiAlO₂), manganese oxide (MnO), and aluminum dross (Al-dross), and
the specific gravity separation device, in system for recovering valuable metals from waste batteries comprises:
a table unit having an inclined surface at a predetermined angle;
a vibration supply unit applying vibrations to the table unit; and
a plurality of separation-discharge units that are connected to the table unit and discharge respective sub-oxides separated by specific gravity.
